(19) Europäisches Patentamt
European Patent Office
Office européen des brevets

(11) **EP 0 854 749 B1**

(12) **EUROPEAN PATENT SPECIFICATION**

(45) Date of publication and mention
of the grant of the patent:
**02.01.2003 Bulletin 2003/01**

(51) Int Cl.[7]: **B01D 53/04**, F17C 11/00,
F17C 13/04

(21) Application number: **97930712.1**

(22) Date of filing: **20.05.1997**

(86) International application number:
**PCT/IB97/00943**

(87) International publication number:
**WO 97/044118 (27.11.1997 Gazette 1997/51)**

(54) **FLUID STORAGE AND DELIVERY SYSTEM COMPRISING HIGH WORK CAPACITY PHYSICAL SORBENT**

FLÜSSIGKEITSBEHÄLTER UND -ABGABESYSTEM MIT PHYSIKALISCHEM SORPTIONSMITTEL MIT HOHER KAPAZITÄT

SYSTEME DE STOCKAGE ET D'APPORT DE FLUIDE COMPRENANT UN SORBENT PHYSIQUE A CAPACITE DE TRAVAIL ELEVEE

(84) Designated Contracting States:
**AT BE CH DE DK ES FI FR GB GR IE IT LI LU MC NL PT SE**

(30) Priority: **20.05.1996 US 650633**
**20.05.1996 US 650634**

(43) Date of publication of application:
**29.07.1998 Bulletin 1998/31**

(73) Proprietor: **ADVANCED TECHNOLOGY MATERIALS, INC.**
**Danbury, CT 06810-4169 (US)**

(72) Inventors:
• **TOM, Glenn, M.**
**New Milford, CT 06776 (US)**
• **OLANDER, W., Karl**
**Tampa, FL 33607 (US)**
• **McMANUS, James, V.**
**Danbury, CT 06811 (US)**

(74) Representative: **Gee, Steven William**
**1 South Lynn Gardens,**
**London Road**
**Shipston on Stour, Warwickshire CV36 4ER (GB)**

(56) References cited:
| WO-A-96/11739 | US-A- 4 723 967 |
| US-A- 4 738 693 | US-A- 4 744 221 |
| US-A- 4 749 384 | US-A- 4 761 395 |
| US-A- 5 051 117 | US-A- 5 385 689 |

## EP 0 854 749 B1

### Description

### Field of the Invention

This invention relates generally to storage and dispensing systems for the selective dispensing of fluids from a vessel or storage container in which the fluid component(s) are held in sorptive relationship to a solid sorbent medium, and are desorptively released from the sorbent medium in the dispensing operation.

### Description of the Related Art

In a wide variety of industrial processes and applications, there is a need for a reliable source of process fluid(s).

Such process and application areas include semiconductor manufacturing, ion implantation, manufacture of flat panel displays, medical intervention and therapy, water treatment, emergency breathing equipment, welding operations, space-based delivery of liquids and gases, etc.

U.S. Patent 4,744,221 issued May 17, 1988 to Karl O. Knollmueller discloses a method of storing and subsequently delivering arsine, by contacting arsine at a temperature of from about -30°C to about +30°C with a zeolite of pore size in the range of from about 0.5 nm to about 1.5 nm (5 to about 15 Angstroms) to adsorb arsine on the zeolite, and then dispensing the arsine by heating the zeolite to an elevated temperature of up to about 175°C for sufficient time to release the arsine from the zeolite material.

The method disclosed in the Knollmueller patent is disadvantageous in that it requires the provision of heating means for the zeolite material, which must be constructed and arranged to heat the zeolite to sufficient temperature to desorb the previously sorbed arsine from the zeolite in the desired quantity.

The use of a heating jacket or other means exterior to the vessel holding the arsine-bearing zeolite is problematic in that the vessel typically has a significant heat capacity, and therefore introduces a significant lag time to the dispensing operation. Further, heating of arsine causes it to decompose, resulting in the formation of hydrogen gas, which introduces an explosive hazard into the process system. Additionally, such thermally-mediated decomposition of arsine effects substantial increase in gas pressure in the process system, which may be extremely disadvantageous from the standpoint of system life and operating efficiency, as well as safety concerns.

The provision of interiorly disposed heating coil or other heating elements in the zeolite bed itself is problematic since it is difficult with such means to uniformly heat the zeolite bed to achieve the desired uniformity of arsine gas release.

The use of heated carrier gas streams passed through the bed of zeolite in its containment vessel may overcome the foregoing deficiencies, but the temperatures necessary to achieve the heated carrier gas desorption of arsine may be undesirably high or otherwise unsuitable for the end use of the arsine gas, so that cooling or other treatment is required to condition the dispensed gas for ultimate use.

U.S. Patent 5,518,528 issued May 21, 1996 in the names of Glenn M. Tom and James V. McManus, describes a gas storage and dispensing system, for the storage and dispensing of gases, which overcomes the above-discussed disadvantages of the gas supply process disclosed in the Knollmueller patent. The gas storage and dispensing system of the Tom et al. patent comprises an adsorption-desorption apparatus, for storage and dispensing of a gas, e.g., a gas selected from the group consisting of hydride gases, halide gases, and organometallic Group V compounds, including: a storage and dispensing vessel constructed and arranged for holding a solid-phase physical sorbent medium, and for selectively flowing gas into and out of said vessel; a solid-phase physical sorbent medium disposed in said storage and dispensing vessel at an interior gas pressure; a sorbate gas physically adsorbed on the solid-phase physical sorbent medium; a dispensing assembly coupled in gas flow communication with the storage and dispensing vessel, and constructed and arranged to provide, exteriorly of the storage and dispensing vessel, a pressure below said interior pressure, to effect desorption of sorbate gas from the solid-phase physical sorbent medium, and gas flow of desorbed gas through the dispensing assembly; wherein the solid-phase physical sorbent medium is devoid of trace components such as water, metals, and oxidic transition metal species (e.g., oxides, sulfites and/or nitrates) which would otherwise decompose the sorbate gas in the storage and dispensing vessel.

By the elimination of such trace components from the solid-phase physical sorbent medium, the decomposition of the sorbate gas after 1 year at 25°C and interior pressure conditions is maintained at extremely low levels, e.g., so that not more than 1-5% by weight of the sorbate gas is decomposed.

The storage and dispensing vessel of the Tom et al. patent thus embodies a substantial advance in the art, relative to the prior art use of high pressure gas cylinders. Conventional high pressure gas cylinders are susceptible to leakage from damaged or malfunctioning regulator assemblies, as well as to rupture if internal decomposition of the gas leads to rapid increasing interior gas pressure in the cylinder and the risk of cylinder rupture or other unwanted bulk release of gas from the cylinder.

The gas storage and dispensing vessel of the Tom et al. patent reduces the pressure of stored sorbate gases by reversibly adsorbing them onto a carrier sorbent medium such as a zeolite or activated carbon material. Other objects and advantages of the invention will be more fully apparent from the ensuing disclosure and appended claims.

There is a continuing need in the art to identify and utilize improved sorbent materials in fluid storage and delivery systems of the type hereinabove described, and it is accordingly an object of the present invention to provide a fluid storage and dispensing system utilizing a high efficiency sorbent material which offers significant advantages in cost, ease of use, and performance characteristics.

Other objects and advantages of the invention will be more fully apparent from the ensuing disclosure and appended claims.

## SUMMARY OF THE INVENTION

The present invention provides an apparatus for storage and dispensing of a sorbable fluid, e.g. a gas, vapour, liquid, multiphase fluid, etc., including fluid mixtures as well as single component fluids.

According to the invention there is provided an adsorption-desorption apparatus, for storage and dispensing of a sorbable fluid, including a storage and dispensing vessel (10) constructed and arranged for holding a solid-phase physical sorbent medium, and for selectively flowing fluid into and out of said vessel; a solid-phase carbon physical sorbent medium (350) disposed in said storage and dispensing vessel at an interior sorbable fluid pressure; and a dispensing assembly (12, 14, 16), with the adsorption-desorption apparatus being arranged for selective dispensing of said sorbable fluid by at least one of (a) pressure differential desorption of the sorbable fluid from said solid-phase physical sorbent medium and (b) thermal desorption of the sorbable fluid from said solid-phase physical sorbent medium, characterised in that said solid-phase physical sorbent medium has {i} a Sorbent Working Capacity, Cw, measured for arsine gas at 5,332.90 Pascals (40 Torr) and at 86,659.56 Pascals (650 Torr), of at least 50, {ii} a pore volume in the range of from about 0.1 to about 5.0 cubic centimeters of pore volume per gram of sorbent material, {iii} more than 50% of its pore volume comprised of pores having a diameter in a range of from about 0.2 nanometer (2 Angstroms) to about 10 nanometers (100 Angstroms), and {iv} an average pore diameter in a range of from about 0.2 nanometer (2 Angstroms) to about 2.0 nanometers (20 Angstroms).

The dispensing assembly may comprise any appropriate conduits, pipes, tubing, flow channels, valving, instrumentation, monitoring means, flow regulators, pumps, blowers, aspirators, or the like, as appropriate to the specific end use application of the fluid storage and dispensing assembly. The apparatus may be configured in any suitable conformation or size of storage and dispensing vessel, such as a vessel usefully having an interior volume on the order of from about 0.01 liter to about 20 liters.

A wide variety of carbon sorbents are employable as efficient sorption media in the apparatus.

The invention may be utilised in a compact, portable, point-of-use fluid storage and dispensing system, containing physically adsorbed fluid at an interior pressure below $1.6 \times 10^5$ Pa (1200 Torr).

As used herein, the term "compact, portable, point-of-use source fluid storage and dispensing system" refers to a system in which the storage and dispensing vessel has an interior volume of from about 0.01 liter to about 20 liters.

Utilisation of the present invention enables a major advance in the art in the provision of a true small-sized low pressure source of fluids, with the ability to fully replace high pressure fluid cylinders which have heretofore been used ubiquitously in gas-requiring applications of all types, e.g., for applications involving welding gases, anaesthesia gases, oxygen or oxygen-enriched breathing gases, semiconductor manufacturing gases, inert blanket gases such as nitrogen for suppressing combustion or chemical reaction, etc.

Particularly in industrial applications such as semiconductor manufacturing, where the amounts of reagent gases may be exceedingly small, e.g., for ion implantation, doping, etc., and very expensive, and where semiconductor manufacturing fabrication facilities arc exceedingly compact and floor space is at a premium, the provision of a low pressure gas source is a major improvement over the current usage of high pressure gas cylinders with their attendant disadvantages.

The interior pressure in the sorbent-containing vessel of the low pressure storage and dispensing system utilising the invention is preferably below about $1.6 \times 10^5$ Pa (1200 Torr). More preferably, the pressure is below $1.07 \times 10^5$ Pa (800 Torr), and most preferably below $9.3 \times 10^4$ Pa (700 Torr). By providing a sub-atmospheric pressure of the sorbed fluid in the storage and dispensing vessel, the risk of leaks and bulk dispersion of the sorbate fluid to the ambient environment is obviated, in contrast to the prior art practice where high pressure containment of the fluid entails a constant and significant risk, and corresponding safety and handling issues.

Performance characteristics applicable to sorbents in the storage and dispensing applications of the present invention include Sorbent Loading Capacity (amount of sorbate fluid which is stored on the sorbent, per unit weight of sorbent material), and Sorbent Working Capacity, $C_w$, defined as the weight of sorbate originally loaded on the sorbent material which is removable from the sorbent medium in the fluid dispensing operation, at given pressure and temperature conditions, per unit volume of the sorbent material, i.e.,

$$C_w = [\text{Weight of Sorbate - Weight of Sorbate Remaining After Desorption}) / (\text{Volume of Adsorbent})$$

where weight of sorbate, and weight of sorbate remaining after desorption, are measured in grams, and adsorbent material volume is measured in liters. As used in such determination, the sorbent material volume is the volume of a bed of the sorbent material. The sorbent material is typically provided in pellet, particulate, extrudate, granular or other divided form, and the volume in the determination of working capacity therefore takes into account the packing density and void (interstitial space) volume of the sorbent material.

Another measure of the efficacy of sorbent materials generally usefully employable in the broad practice of the invention is Percent Desorbable Sorbate of the sorbent material, defined as the percentage of the sorbate gas initially loaded on the sorbent material at $1.01 \times 10^5$ Pa (760 Torr) which is subsequently desorbable solely by pressure desorption to 1333.22 Pa (10 Torr), at 25°C, i.e.,

$$\text{Percent Desorbable Sorbate} = \{ (\text{Weight of Sorbate - Weight of Sorbate Remaining After Desorption}) / (\text{Weight of Sorbate})\} \times 100\%$$

The Percent Desorbable Sorbate desirably is on the order of at least 15%, preferably at least 25%, more preferably at least 50%, and most preferably at least 60%.

The sorbent material has more than 50% of its pore volume comprised of pores having a diameter in the range of from about 0.2 nm (2 Angstroms) to 10 nm (100 Angstroms), with preferably more than 80%, and most preferably substantially all of the pore volume of the sorbent, being in such range.

High performance sorbents utilised in the present invention include those having a Sorbent Working Capacity, $C_w$, measured for arsine gas at 5332.90 Pa (40 Torr) and at 86,659.56 Pa (650 Torr), preferably of at least 100, more preferably at least 150, and most preferably at least 200, grams arsine per liter of sorbent material, measured as

$$C_w = (\text{Weight of arsine gas, in grams, on one liter of sorbent at 86,659.56 Pa (650 Torr) and 25° C})$$

$$- (\text{Weight of arsine gas, in grams, on one liter of sorbent at 6666.12 Pa (50 Torr) and 25° C})$$

where arsine is the reference fluid for such $C_w$ characterization and the liter basis of the sorbent, as mentioned, is the liter volume in bed form, including void or interstitial space, of a bed of the sorbent medium. It is to be noted in this respect that increased working capacity is possible by reducing the pressure to values as low as 133.32 Pa (1 Torr).

The sorbent materials useful in the fluid storage and dispensing system of the invention may have any suitable size, shape, and conformation, including beads, granules, pellets, tablets, powders, particulates, extrudates, cloth or web form materials, honeycomb matrix monolith, and composites (of the sorbent with other components), as well as comminuted or crushed forms of the foregoing conformations of sorbent materials.

Among the carbon sorbent materials, bead activated carbon materials, having a highly uniform spherical shape, with a particle size in the range of from about 0.1 millimeter to 1 centimeter diameter, and more desirably from about 0.25 to about 2 millimeters diameter, are most preferred.

Although it generally is desirable that the sorbent materials employed in the storage and dispensing system of the invention have as high a loading characteristic as possible for the sorbent fluid which is to be stored thereon and subsequently dispensed from the sorbent, extremely high sorbent loading capacity may in some instances be disadvantageous from a heat of sorption standpoint, in respect of the manufacture of the storage and dispensing system. The sorption of the sorbable fluid on the sorbent is typically exothermic. For gases such as arsine and phosphine, the exotherm, depending on the fill rate of the gas onto the sorbent, may entail temperature rises on the order of 100°C or more. Accordingly, it may be desirable to utilize a sorbent medium having high sorptive capacity within a range which does not entail a large heat of adsorption effect during the initial loading of the sorbent medium with the fluid that is to be stored on the sorbent for subsequent dispensing.

Suitable carbon sorbent materials in the fluid storage and dispensing system of the invention may for example have the following adsorption loading characteristic at 25°C temperature:

| Pressure, Pascals (Torr) | Loading (grams of arsine per liter of sorbent): |
|---|---|
| 3333.06 (25) | 35-60 |
| 6666.12 (50) | 75-100 |
| 13332.24 (100) | 100-115 |
| 26664.48 (200) | 160-175 |
| 39996.72 (300) | 200-220 |
| 53328.96 (400) | 225-245 |
| 66661.2 (500) | 240-260 |
| 73327.32 (550) | 250-275 |
| 86659.56 (650) | 260-300. |

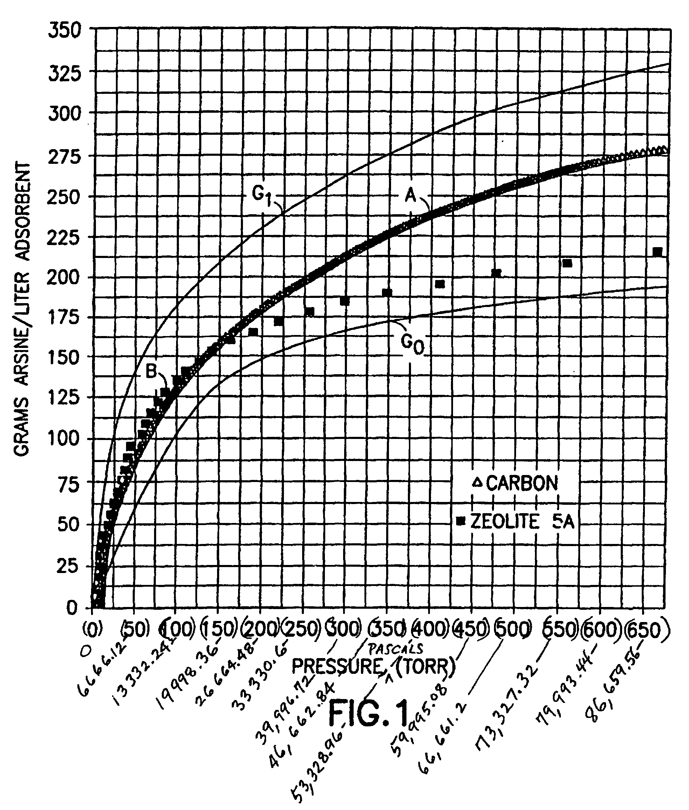

Highly preferred carbon sorbent materials useful in the broad practice of the invention include materials having an adsorption isotherm for arsine gas, at 25°C, measured as grams of arsine adsorbed per liter of the sorbent, as a function of pressure in Pascals (Torr), with the adsorption isotherm characteristic of curve A in Figure 1 (by adsorption isotherm characteristic is meant the substantial shape of the adsorption isotherm in Figure 1, since the adsorption isotherm will shift in the x and y directions with variation in temperature level, but its general shape will be substantially the same).

The sorbent material desirably is devoid of trace components, such as those selected from the group consisting of water, metals, and oxidic transition metal species (e.g., oxides, sulfites and/or nitrates), sufficient in concentration to decompose the sorbate fluid in said storage and dispensing vessel.

In the storage and dispensing system of the invention, the concentration on the sorbent material (based on the weight or the sorbent material) of trace components selected from the group consisting of water and oxidic transition metal species, desirably is insufficient to decompose more than 5%, and preferably more than 1% by weight of the sorbate fluid after 1 year at 25°C and said interior pressure. Such constraint on the sorbent ensures that sorbate fluids such as hydride gases, e.g., arsine, phosphine, etc., which are otherwise susceptible to decomposition in the presence of water, metals, and oxidic transition metal species (e.g., oxides, sulfites and/or nitrates), are maintained free of substantial exposure to such species, so that significant levels of decomposition of the sorbate gas, and resulting pressure buildup problems, are avoided.

Preferably, the concentration of trace components selected from the group consisting of water, metals, and oxidic transition metal species, based on the weight of the sorbent material, is insufficient to cause decomposition of the sorbate fluid resulting in more than a 25% rise; and preferably more than a 10% rise, in interior pressure after 1 week at 25°C in the storage and dispensing vessel.

Carbon sorbent materials advantageously employed in the practice of the present invention include carbon materials which desirably contain less than 350, preferably less than 100, more preferably less than 10, and most preferably less than 1, part(s)-per-million by weight of trace components selected from the group consisting of water and oxidic transition metal species, based on the weight of the sorbent medium.

Preferred carbon sorbents in the practice of the invention may also be specified in terms of their ash content. Preferred carbons have ash content less than about 7%, preferably less than about 5%, and most preferably less than about 0.1%. Various carbon sorbents have ash content as high as 15%. The ash content can vary widely depending on the source of the specific carbon material.

Ash is an inorganic material, including constituents such as silica which can be detrimental in applications involving sorbable fluids such as hydrogen fluoride and boron trifluoride, which will irreversibly chemisorb onto these types of compounds. Such chemisorption is highly disadvantageous, since it will result in the loss of the chemisorbed compound. Accordingly, low ash content carbon sorbents are particularly preferred in practice.

The problems incident to the use of high ash content carbon sorbents discussed hereinabove are particularly severe in the case of fluorides. The take-up of fluorides by high ash content carbon sorbents will actually result in interior pressure in the storage and dispensing vessel declining as the products of the reaction between the adsorbate and the impurities in the high ash sorbent yield involatile products.

Although the fluid storage and dispensing system of the invention is described hereinafter primarily with reference to dispensing of fluid from the vessel by pressure differential, it will be appreciated that the storage and dispensing system of the invention may effect dispensing solely by differential pressure desorption of the sorbate fluid, as well as thermally desorbing the fluid from the sorbent material on which it previously has been sorbed. Alternatively, the desorption of the sorbate fluid from the sorbent medium on which it is loaded, may be usefully carried out with a combination of pressure differential and thermally-mediated release of the sorbate from the sorbate medium.

The choice of the specific modality of desorption (pressure and/or thermal), and the appertaining process conditions therefor, may readily be selected and determined by the skilled artisan without undue experimentation, based on the nature of the sorbent material, the specific sorbate fluid, and the particular end use application in which the desorbed fluid is to be employed.

When the fluid storage and dispensing system of the invention is constructed and arranged to carry out thermal desorption of the fluid from the sorbent material in the vessel, heating means may be operatively arranged in relation to the storage and dispensing vessel for selective heating of the sorbent material, to effect thermally-enhanced desorption of the sorbate gas from the sorbent material. The heating means may include electrical resistance heating elements, extended heat transfer surface members, radiative heating members, or other thermal actuatable heating means disposed in the sorbent bed in the storage and dispensing vessel, or otherwise arranged for transfer or in situ generation of heat to the sorbent material, to effect elevation of the temperature of the sorbent, and desorption of the sorbale fluid.

The carbon sorbent material employed in the practice of the invention may be suitably processed or treated to ensure that it is devoid of components or contaminants, e.g., trace components such as those discussed hereinabove, which would deleteriously affect the performance of the gas storage and dispensing system in respect of the sorption and desorption of the sorbate fluid. For example, the sorbent may be subjected to washing treatment(s), e. g., with hydrofluorie acid, to render it sufficiently free of trace components such as metals and oxidic transition metal species.

The carbon sorbent material also may be variously treated to enhance the sorptive capacity and/or other performance characteristics of the sorbent. For example. the sorbent may be treated or reacted to functionalize the surface of the sorbent with chemical moieties which facilitate or enhance (I) sorption of a specific fluid on the sorbent medium when the sorbent is originally loaded with the fluid to be subsequently dispensed, and/or (2) desorplion of the fluid when the sorbent is subjected to process conditions for dispensing the fluid from the storage and dispensing vessel.

Additionally, the treatment may improve the purity of the desorbate. For example, reductive treatment of the surface oxide groups may be employed to reduce the amout of $CO$, $CO_2$, and hydrocarbon impurities in the desorbate.

Further, various temperature ranges may be employed during the degas procedure. Typically, carbon materials are degassed up to 500 degrees Centigrade, although higher temperature treatments may be applied.

Additional methods of modifying the carbon sorbent material may be variously employed in the broad practice of the invention, including applying a sorption-enhancing material on the surfaces including the interior pore surfaces of the material. For example, an adsorption-enhancing liquid, solid, or semisolid material, e.g., Carbowax, may be applied to the sorbent, to facilitate physical sorption of the fluid on solid sorption sites on the surfaces of the sorbent, as well as sorption on or solubilization in the adsorption-enhancing material itself which has been applied to the surfaces of the sorbent.

The storage and dispensing system of the invention additionally may comprise the carbon sorbent material in the storage and dispensing vessel together with a chemisorbent material in the vessel having affinity for contaminants, e.g., decomposition products, of the sorbate gas therein. Such chemisorbent may for example comprise a solid sorbent composition having a chemisorbent affinity for non-inert atmospheric gases. Examples of potentially suitable chemisorbent materials include scavengers selected from the group consisting of:

(A) scavengers including a support having associated therewith, but not covalently bonded thereto, a compound which in the presence of such contaminant provides an anion which is reactive to effect the removal of such contaminant, said compound being selected from one or more members of the group consisting of:

(i) carbanion source compounds whose corresponding protonated carbanion compounds have a $pK_a$ value of from about 22 to about 36; and

(ii) anion source compounds formed by reaction of said carbanion source compounds with the sorbate gas; and

(B) scavengers comprising:

(i) an inert support having a surface area in the range of from about 50 to about 1000 square meters per gram, and thermally stable up to at least about 250° C; and

(ii) an active scavenging species, present on the support at a concentration of from about 0.01 to about 1.0 moles per liter of support, and formed by the deposition on the support of a Group IA metal selected from sodium, potassium, rubidium, and cesium and their mixtures and alloys and pyrolysis thereof on said support.

By way of further specific example, the chemisorbent material may advantageously comprise a scavenger component selected from the group consisting of: trityllithium and potassium arsenide.

In respect of the use of such chemisorbent materials for removing contaminants of the sorbate fluid to be dispensed, any of a wide variety of scavengers or chemisorbent materials may be employed, including scavenger compositions of the types disclosed and claimed in U.S. Patent 4,761,395 issued August 2, 1988 to Glenn M. Tom, et al., and U.S. Patent 5,385,689 in the names of Glenn M. Tom and James V. McManus.

The chemisorbent material when employed may be utilized as a separate bed in fluid flow communication with the bed of sorbent material, or alternatively the chemisorbent may be dispersed randomly or selectively throughout a bed of sorbent material in the storage and dispensing vessel.

The present invention also provides a process for supplying a fluid reagent comprising use of the apparatus as herein defined, according to claim 45.

Fluids which may be usefully stored and subsequently dispensed from the storage and dispensing system of the invention include any suitable fluid, e.g., a gas, vapor, liquid, multiphase fluid, and fluid mixtures, which has sorptive affinity for the carbon sorbent material. Examples include acid and hydride gases, halide gases, vapor-phase organometallic compounds, oxidizing gases, etc.

Specific examples of sorbate gas species which are usefully storable and dispensable in the practice of the invention include silane, germane, arsine, phosphine, phosgene, diborane, germane, ammonia, stibine, hydrogen sulfide, hydrogen selenide, hydrogen telluride, nitrous oxide, hydrogen cyanide, ethylene oxide, the deuterated hydrides, halide (chlorine, bromine, fluorine, and iodine) compounds, including such compounds as $F_2$, $SiF_4$, $Cl_2$, $ClF_3$, $GeF_4$, $SiF_4$, boron halides, etc., and organometallic compounds of metals such as aluminum, barium, strontium, gallium, indium, tungsten, antimony, silver, gold, palladium, gadolinium, etc.

Preferably, the apparatus includes a cryopump joined to the dispensing assembly for pressurizing the desorbed gas and discharging the resultingly pressurized gas.

Preferably, the process includes cryopumping the desorbed fluid from the storage and dispensing vessel to a predetermined pressure, wherein such predetermined pressure is higher than the pressure of the desorbed fluid flowed out of the storage and dispensing vessel.

The storage and dispensing system of the invention may be employed in any of a wide variety of end use applications, including ion implantation, silicon semiconductor manufacturing, compound semiconductor manufacturing, manufacture of flat panel displays, supply of gas for organic synthesis, dispensing of sterilizing gases, e.g., ethylene oxide, fumigation and pest control, anaesthesia gas delivery, treatment of water and other fluids involving gas-liquid contacting, welding, dispensing of gardening and crop protection formulations, cooking gas supply, space-borne applications, bulk chemical and gas delivery, oxygen supply for breathing gas applications as well as $O_2$ reagent applications, etc.

Other aspects, features and embodiments of the invention will be more fully apparent from the ensuing disclosure and appended claims.

## BRIEF DESCRIPTION OF THE DRAWINGS

Figure 1 shows a graph of the adsorption isotherm for arsine, as a plot of the arsine loading in grams arsine per liter of sorbent material, as a function of the pressure in Pascals (Torr), for a carbon sorbent (curve A) and for zeolite 5A (curve B), together with isotherm bands $G_0$ and $G_1$, demarcating an isotherm regime for practice of the present invention in one aspect thereof.

Figure 2 is a plot of accumulated pore volume, in cubic centimeters per gram, as a function of pore size, for some illustrative activated carbon sorbents useful in the broad practice of the present invention.

Figure 3 is a schematic representation of a storage and delivery system according to one embodiment of the invention.

Figure 4 is a plot of cylinder pressure, in Pascals (Torr), as a function of time, in hours, graphically showing the pressure decay of arsine gas on carbon sorbent in a storage and dispensing system according to the embodiment of Figure 3, after the termination of the arsine filling operation.

Figure 5 is a plot of pressure decay rate, in Pascals (Torr)/hour, as a function of time, in hours, for the arsine storage and delivery system according to the present invention, whose post-fill pressure characteristics are shown in Figure 4.

Figure 6 is a plot of an arsine adsorption isotherm, plotted as arsine loading, in grams/liter, as a function of storage and dispensing vessel pressure, in Pascals (Torr), on a bead carbon sorbent material.

Figure 7 is a perspective schematic view of a storage and dispensing system according to another embodiment of the invention.

Figure 8 is a process system including a storage and dispensing arrangement for delivery of gas, in accordance with one embodiment of the invention, for ion implantation use of the dispensed gas.

Figure 9 is a perspective cross-sectional view of the storage and dispensing vessel of Figure 8, showing the interior structure of such vessel.

Figure 10 is a schematic perspective view of a cryopumping storage and delivery system apparatus according to a further embodiment of the invention.

Figure 11 is a schematic representation of a delivery measurement apparatus for evaluating the performance of a storage and dispensing system according to the invention.

Figure 12 is a graph of performance of a storage and delivery system comprising 5A molecular sieve as the sorbent material (curve M, data point symbol $\triangle$) and a storage and dispensing system comprising bead activated carbon as the sorbent material (curve N, data point symbol $\square$), showing pressure in the storage and dispensing vessel, in Pascals (Torr), as a function of hours in operation at a flow rate of 1 standard cubic centimeter arsine per minute.

## DETAILED DESCRIPTION OF THE INVENTION, AND PREFERRED EMBODIMENTS THEREOF

WO 96/11739 shows an adsorption-desorption apparatus according to the introductory part of claim 1. This document shows different solid-phase physical sorbent media.

The present invention provides a new low pressure storage and delivery system as a source fluid supply means for applications such as ion implantation of hydride and halide gases, and organornetallic Group V compounds. Illustrative examples of the foregoing include arsine, phosphine, germane, chlorine, $NF_3$, $BF_3$, $BCl_3$, diborane ($B_2H_6$ and its deuterium analog, $B_2D_6$), HCl, HBr, HF, HI, tungsten hexafluoride, and $(CH_3)_3Sb$. The present invention also provides a new low pressure storage and delivery system as a compact, portable, point-of-use source fluid supply means.

As used herein, the term "low pressure" means a pressure not substantially exceeding $1.013 \times 10^5$ Pa (1 atmosphere), e.g., a pressure $\leq 1.266 \times 10^5$ Pa (1.25 atmosphere), more preferably a pressure $\leq 1.013 \times 10^5$ Pa (1.0 atmosphere), and most preferably a pressure within the range of from about 15,195 Pa to about 81,040 Pa (about 0.15 to about 0.8 atmospheres).

It will be recognized that the storage and dispensing system of the present invention may be operated at higher pressures than in the above-described low pressure regime, within the broad practice of the invention, however such storage and dispensing system has particular utility in applications in which the fluid is employed at subatmospheric pressure, as for example in ion implantation applications. In such end usage, the system of the invention permits fluid to be stored and dispensed at low pressure.

By such low pressure operation, the system of the invention obviates the necessity in many applications for high pressure fluid vessels of the prior art which heretofore have been used in such applications. Particularly where hazardous gases are involved, the use of high pressure vessels entails an enhanced risk of leakage and harm to persons and/or property, relative to the low pressure system of the present invention, where the fluid medium may be stored at near ambient pressure levels, and dispensed in a ready and controllable manner.

The fluid source system of the invention comprises a leak-tight vessel, such as a gas cylinder, containing the fluid to be dispensed, adsorbed into a sorbent material comprising a physical adsorbent material. In the case of gaseous sorbates, such as arsine and phosphine, the sorbent reduces the vapor pressure of the sorbate gas to $\leq 1.013 \times 10^5$ Pa (1 atmosphere).

While the invention is discussed primarily hereinafter in terms of the storage and delivery of arsine and phosphine gases, it will be recognized that the utility of the present invention is not thus limited, but rather extends to and is inclusive of a wide variety of other gases as well as liquids, liquid-vapor mixtures, etc. Illustrative examples include silane, diborane, arsine, phosphine, phosgene, chlorine, $BCl_3$, $BF_3$, $B_2D_6$, tungsten hexafluoride, hydrogen fluoride, hydrogen chloride, hydrogen iodide, hydrogen bromide, germane, ammonia, stibine, hydrogen sulfide, hydrogen cyanide, hydrogen selenide, hydrogen telluride, deuterated hydrides, halide (chlorine, bromine, iodine, and fluorine) gaseous compounds such as $NF_3$, $ClF_3$, $GeF_4$, $SiF_4$, organo compounds, and organometallic Group V compounds such as $(CH_3)_3Sb$.

The novel means and method of the present invention for storing and delivering fluids at $\leq 0$ Pa (0 psig) greatly reduces the hazard posed by these fluids. The inventive technique involves the adsorption of these fluids into a carbonaceous physical adsorbent. By adsorbing the fluid into a carbonaceous solid physical sorbent, the vapor pressure of the fluid can be reduced to $\leq 0$ Pa (0 psig). The release potential from this system is greatly reduced as the driving force of pressure is eliminated.

Preferred forms of carbon sorbent materials include: carbon formed by pyrolysis of synthetic hydrocarbon resins such as polyacrylonitrile, sulfonated polystryrene-divinylbenzene, etc.; cellulosic char; charcoal; activated carbon formed from natural source materials such as coconut shells, pitch, wood, petroleum, coal, etc.

Although carbon sorbent materials arc known per se, and have been used for example in the treatment of effluent gas streams from a wide variety of industrial processes, e.g., for VOC abatement in the semiconductor industry by sorption of the VOC from the effluent stream onto very large beds of carbon, there nonetheless has been no carbon sorptive material-based storage and dispensing system for supplying fluid reagents and process gases in the first instance. Accordingly, the present invention represents a substantial advance in the art, by utilizing carbon sorbent materials which are readily commercially available in a wide variety of sizes, shapes, surface areas, compositions, to provide an effective fluid supply system which obviates the dangers, deficiencies, and disadvantages of the prior art practice of supplying process gases and fluid reagents from pressurized cylinders.

The prior art has utilized gas cylinders extensively, for supplying welding gases, anesthesia gases, oxygen, chemical process reagent gases, etc., and has used cylinder vessels with extremely thick walls to contain the high pressures involved, since the cylinders' supply capacity (amount of dispensable fluid) is a function of the pressure level in the cylinder, and increased pressure levels are consistent with increased cylinder dispensing capacity.

The present invention, by utilizing a sorptive medium, viz., a carbonaceous sorbent, avoids the process difficulties (including the risk of high pressure gas cylinder rupture, the risk of overpressure from decomposition of gases in situ, and the difficulties associated with monitoring and regulating very high pressure gases, which in the case of hazardous gases requires special safety and handling measures commensurate with the dangers involved). The sorptive medium of the invention permits ready storage of the fluid and easily effected pressure differential and/or thermal desorption dispensing.

As used herein, the term "carbonaceous" in reference to the physical sorbent material of the invention, means that the sorbent material comprises elemental carbon as its major component in the sorbent mass. Preferred forms of carbon sorbent materials include: carbon formed by pyrolysis of synthetic hydrocarbon resins such as polyacrylonitrile, sulfonated polystryrene-divinylbenzene, etc.; cellulosic char; charcoal; activated carbon formed from natural source materials such as coconut shells, pitch, wood, petroleum, coal, etc.

A preferred carbon sorbent material is activated carbon, a highly sorbent form of carbon produced by heating granulated charcoal to appropriate elevated temperature. Most preferred are the so-called bead carbon forms of activated carbon, where the beads, i.e., highly uniform diameter spherical particles, may have a diameter in the range of from about 0.1 to about 1 centimeter, and more preferably from about 0.25 to about 2 millimeters diameter.

Commercially available carbon sorbent materials which are preferred in the broad practice of the invention include bead carbon materials designated as BAC-MP, BAC-LP, and BAC-G-70R, available from Kureha Corporation of America, New York, NY; Ambersorb® carbonaceous sorbents commercially available from Rohm & Haas Company, Philadelphia, PA as grades Ambersorb® 563, Ambersorb® 564, Ambersorb® 348F, Ambersorb® 575, Ambersorb® 572, and Ambersorb® 1500; Calgon Filtrasorb 400® and BPL GAC carbon sorbent materials commercially available from Calgon Carbon Corporation; and bead activated carbon sorbent materials commercially available from Blucher GmbH, Erkrath, Germany. Among the aforementioned carbon sorbents, the Ambersorb materials have substantial pore volume in pores greater than 5.0 nm (50 Angstroms), and in general such large pore sized materials are less preferred than those having pores not exceeding about 4.0 nm (40 Angstroms).

The sorbent used in the storage and dispensing system of the invention may have any suitable size, shape and conformation appropriate to the end use application and the specific sorbate fluid species involved. The sorbent material may for example be in the form of beads, granules, pellets, tablets, powders, particulates, extrudates, cloth or web form materials, honeycomb matrix monolith, composites (of the sorbent with other components), or comminuted or crushed forms of the foregoing conformations.

Collectively, the storage and delivery system of the present invention may usefully consist of a standard gas cylinder, and a cylinder valve or other flow dispensing assembly (regulators, monitors, sensors, flow directing means, pressure controllers, mass flow controllers, piping, valving, instrumentation, automatic start and shut-off devices, etc.) coupled to the cylinder, with the cylinder holding the carbon sorbent material. After loading of sorbent into the storage and dispensing vessel, the cylinder is subsequently filled, e.g., to a pressure below $1.013 \times 10^5$ Pa (1 atmosphere) pressure, with a sorbate fluid, to yield the product storage and dispensing system.

In use, fluid flow from the storage and delivery system of the invention by pressure differential desorption may be readily carried out by utilizing a pressure differential between the pressure in the interior volume of the storage and delivery system and a lower pressure exterior to the sorbent-containing vessel.

For example, the sorbent-containing vessel may hold a reagent gas such as phosphine at a subatmospheric pressure, e.g., 79,993.44 Pa (600 Torr), for use in an ion implantation process, where the ion implant chamber for implanting the phosphorus constituent is maintained under vacuum conditions or alternatively at low pressure, e.g., below 13332.24 Pa (100 Torr), and below the pressure of the interior volume in the storage and dispensing vessel. As a result, phosphine gas will desorb from the sorbent in the vessel and flow to the ion implant chamber, when gas flow communication is established between the ion implant chamber and the storage and dispensing vessel containing the sorbate phosphine gas. The storage and dispensing system thus effects flow of the phosphine gas through the connecting piping, valving and instrumentation, and is readily controllable at a desired flow rate. Utilizing a device such as a mass flow controller, a constant flow can be achieved as the sorbent vessel pressure decreases with continued dispensing operation.

Additionally, or alternatively, the fluid dispensing assembly of the storage and dispensing system of the invention may include means for heating the sorbent material, to thermally desorb sorbate fluid therefrom. Such heating means may include any suitable heat transfer or heat exchange devices, structures or apparatus, which are operatively associated with the sorbent material to effect heating thereof, for thermal desorption of the sorbate from the sorbent medium. Thus, the present invention contemplates heat- and/or pressure-mediated dispensing of sorbate fluid from the sorbent on which same is stored.

Referring now to the drawings, Figure 1 is a graph of an adsorption isotherm for arsine, shown as a plot of the arsine loading, measured in grams of arsine per liter of sorbent material, as a function of the pressure, measured in Pascals (Torr), for each of an illustrative carbon sorbent (curve A, data point symbol D) and for zeolite 5A molecular sieve (curve B, data point symbol □). The carbon sorbent material is a Kureha BAC-G-70R carbon material, having the following physical properties set out in Table I below.

TABLE I

| Bead Carbon Sorbent Material | |
|---|---|
| True Density | 1.9-2.1 g/ml |
| Bulk Density | 0.5-0.62 g/ml |
| Surface Area | 800-1300 $m^2$/grams |
| CCl4 Activity | >= 55% |
| Kindling Point | 400°C |
| Autoignition Point (in air) | 400°C |
| Ash Content | <=0.5% |
| Particle Size Availability | 0.4-0.7 mm |
| Particle Size of BAC-G-70R | 0.7 mm Avg.; >.84 mm (25%); < .59 mm (5%) |
| Moisture Content | <5% |

Note in respect of the foregoing that the moisture content of this bead carbon material is further reduced by heating and evacuation of the carbon as originally supplied from the vendor, to levels as low as 0.01% and below. Such pretreatment of the carbon sorbent is also of benefit in respect of other undesirable adsorbed impurities in the as-received carbon material.

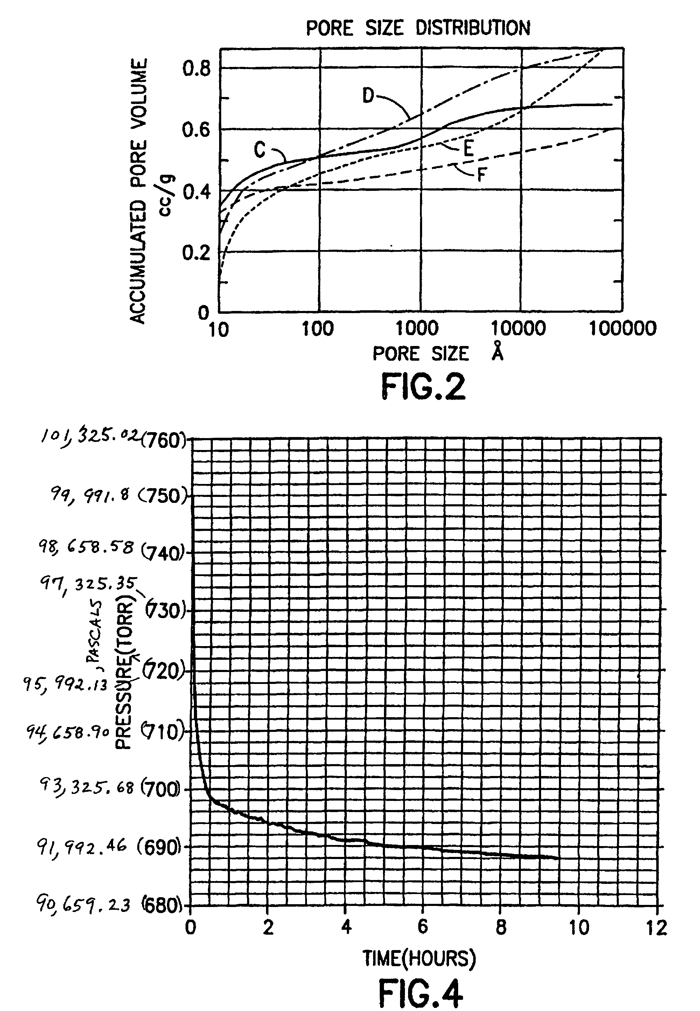

Figure 2 is a plot of accumulated pore volume, in cubic centimeters per gram, as a function of pore size, in nm (Angstroms), for the bead carbon sorbent material of Table I (curve C) and for some additional illustrative commercially available activated carbon sorbents (curves D, E and F) useful in the broad practice of the present invention. As shown, the curve C bead carbon material has an accumulated pore volume of from about 0.3 to about 0.7 over the range of pore sizes from 1 to 1000 nm (10 to 10,000 Angstroms). The other carbon sorbent materials of curves D, E and F have a wider range of accumulated pore volume.

In general, it is desirable to utilize a sorbent material having a substantial portion, preferably at least 50%, of its pores in the size range of from about 1 to 100 nm (10 to 1000 Angstroms). More desirably, the sorbent material has a major fraction, i.e. more than 50%, of its pore volume, comprised of pores with a diameter in the range of from about 0.2 nm to 10 nm (2 Angstroms to 100 Angstroms), with preferably more than 80%, and most preferably substantially all of the pore volume of the sorbent material, being in such range.

Preferred sorbent materials include sorbents having an average pore diameter in the range of from about 1.0 to 2.0 nm (10 to about 20 Angstroms), and a major fraction of the pore volume within such range, with preferably more than 80%, and most preferably substantially all of its pore volume being in such range.

Desirable sorbents include materials having a pore volume (cumulative void volume) in the range of from about 0.2 to about 2.0 cubic centimeters of pore volume per gram of sorbent material.

The interior pressure in the sorbent-containing vessel of the low pressure storage and dispensing system of the invention is below about $1.6 \times 10^5$ Pa (1200 Torr). Preferably, the pressure is below $1.07 \times 10^5$ Pa (800 Torr), and most preferably below $9.3 \times 10^4$ Pa (700 Torr). By providing a sub-atmospheric pressure of the sorbed fluid in the storage and dispensing vessel, the risk of leaks and bulk dispersion of the sorbate fluid to the ambient environment is obviated, in contrast to the prior art practice where high pressure containment of the fluid entails a constant and significant risk, and corresponding safety and handling issues.

The sorbent material desirably has the characteristic of readily sorbing the sorbate fluid in the first instance, at suitably high rate, and correspondingly releasing the previously sorbed fluid in a rapid manner in response to (1) a pressure differential between the interior volume of the storage and dispensing vessel and an exterior locus at lower pressure, and/or (2) heating of the sorbent, when the storage and dispensing system is in a fluid dispensing mode of operation.

Sorbent materials useful in the fluid storage and dispensing system of the invention include materials having a pore volume (cumulative void volume) in the range of from about 0.1 to about 5.0 cubic centimeters of pore volume per gram of sorbent material, and preferably from about 0.5 to about 2.0 cubic centimeters of pore volume per gram of sorbent material.

The sorbents have an average pore diameter in the range of from about 0.2 nm to about 2.0 nm (2 to about 20 Angstroms), and a major fraction of the pore volume within such range, more preferably more than 80%, and most preferably substantially all of its pore volume being in such range.

High performance carbon sorbents useful in the broad practice of the present invention include those having a Sorbent Working Capacity, $C_w$, measured for arsine gas (as the reference fluid) at 5332.90 Pa (40 Torr) and at 86,659.56 Pa (650 Torr), of preferably at least 100, more preferably at least 150, and most preferably at least 200, grams arsine per liter of sorbent material. The Percent Desorbable Sorbate desirably is on the order of at least 15%, preferably at least 25%, more preferably at least 50%, and most preferably at least 60%.

Bead activated carbon materials, having a highly uniform spherical shape, with a particle size in the range of from about 0.1 millimeter to 1 centimeter diameter, and more preferably from about 0.25 to about 2 millimeters diameter, are highly advantageous in the practice of the present invention. It will be recognized that the sorbent particle size, shape, and pore size distribution may be independently and significantly varied in the practice of the invention, to adjust the packing of the sorbent particles and the loading density of the sorbent material in the bed.

The sorbent materials useful in the fluid storage and dispensing system of the invention generally may have any suitable size, shape, and conformation, including beads, granules, pellets, tablets, powders, particulates, cxtrudates, cloth or web form materials, honeycomb matrix monolith, and composites (of the sorbent with other components), as well as comminuted or crushed forms of the foregoing conformations of sorbent materials.

Among the carbon sorbent materials, bead activated carbon materials, having a highly uniform spherical shape, with a particle size in the range of from about 0.1 millimeter to 1 centimeter diameter, and more desirably from about 0.25 to about 2 millimeters diameter, are most preferred.

Although it generally is desirable that the sorbent materials employed in the storage and dispensing system of the invention have as high a loading characteristic as possible for the sorbent fluid which is to be stored thereon and subsequently dispensed from the sorbent, extremely high sorbent loading capacity may in some instances be disadvantageous from a heat of sorption standpoint, in respect of the manufacture of the storage and dispensing system. The sorption of the sorbable fluid on the sorbent is typically exothermic and for gases such as arsine and phosphine, the exotherm, depending on the fill rate of the gas onto the sorbcnt, may entail temperature rises on the order of 100°C or more. Accordingly, it may be desirable to utilize a sorbent medium having high sorptive capacity within a range which does not entail a large heat of adsorption effect during the initial loading of the sorbent medium with the fluid to be stored thereon for subsequent dispensing.

Preferred carbon sorbent materials in the fluid storage and dispensing system of the invention comprise carbon materials which have an arsine gas adsorption isotherm at 25°C, measured in grams of arsine adsorbed per liter of the sorbent, as a function of pressure in Pascals (Torr), with the following adsorption loading characteristic:

| Pressure, Pascals (Torr) | Loading (grams of arsine per liter of sorbent) of at least: |
|---|---|
| 3333.06 (25) | 35 |
| 6666.12 (50) | 75 |
| 13332.24 (100) | 100 |
| 26,664.48 (200) | 160 |
| 39996.72 (300) | 200 |
| 53328.96 (400) | 225 |
| 66661.2 (500) | 240 |
| 73327.32 (550) | 250 |
| 86659.56 (650) | ~300. |

Suitable carbon sorbent materials may for example have the following adsorption loading characteristic at 25°C temperature:

| Pressure, Pascals (Torr) | Loading (grams of arsine per liter of sorbent): |
|---|---|
| 3333.06 (25) | 35-60 |
| 6666.12 (50) | 75-100 |
| 13332.24 (100) | 100-115 |

(continued)

| Pressure, Pascals (Torr) | Loading (grams of arsine per liter of sorbent): |
|---|---|
| 26664.48 (200) | 160-175 |
| 39996.72 (300) | 200-220 |
| 53328.96 (400) | 225-245 |
| 66661.2 (500) | 240-260 |
| 73327.32 (550) | 250-275 |
| 86659.56 (650) | 260-300. |

Highly preferred carbon sorbent materials useful in the broad practice of the invention include materials having an adsorption isotherm for arsine gas, at 25°C, measured as grams of arsine adsorbed per liter of the sorbent, as a function of pressure in Pa (Torr), with the adsorption isotherm characteristic of curve A in Figure 1.

It will be recognized that the pore size, pore volume, and surface area characteristics of the sorbent may be widely varied in the broad practice of the present invention, and that the skilled artisan may readily determine suitable sorbent characteristics for a given end use application of the storage and dispensing system of the present invention without undue experimentation using surface area and porosity determinations, e.g., with mercury porosimetry techniques, and affinity studies for the particular fluid sought to be stored on and dispensed from the particular candidate sorbent material.

Referring again to Figure 1, an isotherm for a sorbent material and a specific sorbate gas is generally useful in predicting the quantity of sorbate removable at a given pressure. This is due to the reversibility of the adsorption/desorption process for the physisorbed fluid species. For example, for the bead carbon sorbent material of curve A, if the sorbent material on which the arsine fluid is sorbed, is desorbed from a pressure of 86659.56 Pa (650 Torr) to a pressure of 13332.24 Pa (100 Torr), then the isotherm predicts that 140 grams of arsine per liter of sorbent material (275 grams-135 grams = 140 grams) should be desorbed. The zeolite 5A molecular sieve, by contrast, when desorbed over a same pressure differential, exhibits desorption of only 87.5 grams of sorbate fluid (215 grams-127.5 grams = 87.5 grams).

Thus, the amount of sorbate recoverable from the carbon sorbent in a storage and dispensing system of the invention, when operated by pressure desorption over the specified pressure range of 86659.56 Pa (650 Torr) to 13332.24 Pa (100 Torr), is 60% higher than the zeolite 5A material of the prior art storage and dispensing system. Accordingly, the performance of the carbon sorbent material of curve A in Figure 1, as representative of the performance of the carbon sorbent media of the present invention, evidences a surprising and unexpected improvement in the ability to desorb the sorbate fluid from the sorbent material for dispensing.

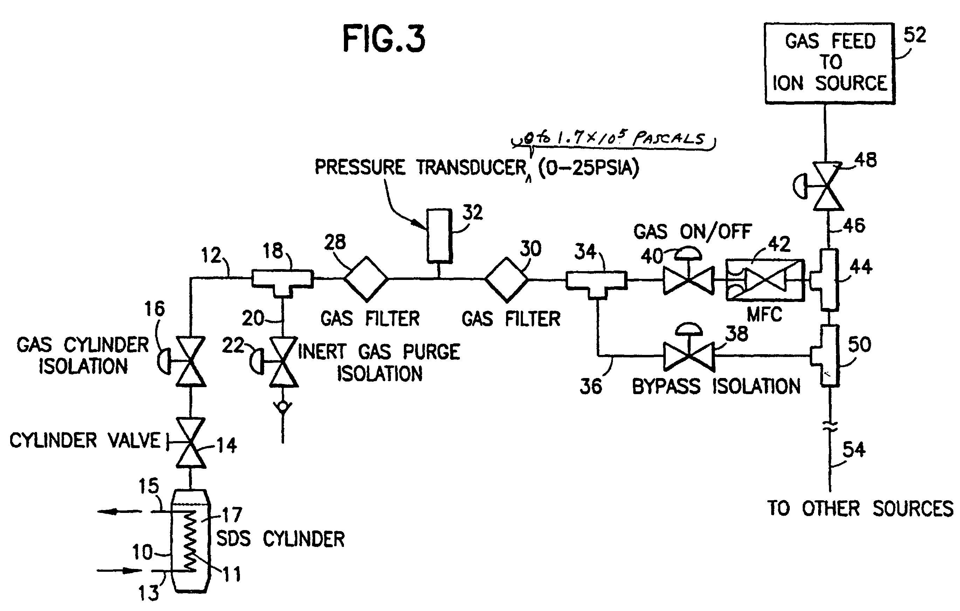

Figure 3 is a schematic representation of a storage and delivery system according to one embodiment of the invention.

In the schematic storage and delivery system shown in Figure 3, a gas storage cylinder 10 is provided which may be filled with a bed 17 of suitable physical adsorbent material, e.g., a bead activated carbon physical adsorbent medium of a type as more fully described hereinabove. The gas cylinder 10 contains the bed 17 of sorbent material, with the sorbent material having a physically adsorbed gas component(s), such as arsine or phosphine, adsorbed on its surfaces (including pores as well as exterior surface of the sorbent media).

The cylinder 10 is connected to a manifold 12, having disposed therein a cylinder valve 14 for controllably releasing gas from cylinder 10, upstream of a gas cylinder isolation valve 16, which may be selectively actuated to close cylinder 10 to communication with the manifold 12.

The manifold has a branch fitting 18 therein, by means of which the manifold 12 is coupled in gas flow communication with a branch purge line 20 having inert gas purge isolation valve 22 therein, whereby the manifold may be purged with inert gas, prior to active operation delivery of gas from cylinder 10.

Downstream from the fitting 18, the manifold contains two successive gas filters 28 and 30, intermediate of which is disposed a pressure transducer 32 which may for example, have a pressure operating range of from about 0 Pa (0) to about 172,369 Pa (25 psia).

The manifold 12 is connected downstream of gas filter 30 with a branch fitting 34 to which is coupled a bypass conduit 36 having bypass isolation valve 38 therein. The manifold 12 downstream of fitting 34 has a gas flow on-off valve 40 therein, downstream of which is disposed a mass flow controller 42 for controllably adjusting the flow rate of the gas dispensed through manifold 12. At its terminus downstream of mass flow controller 42, the manifold 12 is connected by coupling fitting 44 to dispensing line 46 filing flow control valve 48 therein, and also being coupled in gas flow communication with bypass line 36 via coupling fitting 50. The discharge line 46 is as shown joined to an ion source generating means, schematically shown as element 52. The other end 54 of discharge line 46 may be suitably coupled in gas flow communication with another gas dispensing means, as desirable or necessary in a given end use application of the Figure 3 storage and delivery system apparatus.

Shown as an optional feature of the storage and dispensing vessel 10 in the Figure 3 embodiment is a heat exchange passage 11 which extends vertically upwardly through the bed 17 of sorbent material. The heat exchange passage is joined at its respective lower and upper ends to heat exchange fluid feed inlet line 13 and heat exchange fluid effluent discharge line 15. The heat exchange fluid feed inlet line 13 may in turn be joined to a suitable source of heat exchange fluid (not shown) which may be operatively associated with a burner, resistance heater, or other heating means serving to selectively heat the bed 17 of sorbent material when it is desired to dispense fluid from the vessel 10. Thermal desorption thus may be effected by passage of a suitable heat exchange fluid through the feed inlet line 13, the heat exchange passage 11, and the fluid effluent discharge line 15, for recirculation (e.g., by pump and reservoir means, not shown) through the heat exchange circuit. Such heating means thereby function to heat the sorbent medium in the bed 17 to sufficient elevated temperature for thermally-assisted desorption to take place.

By the arrangement schematically shown in Figure 3, thermally assisted desorption and dispensing of the sorbate fluid may be carried out alternative to, or in combination with, pressure differential-mediated dispensing of the sorbate fluid, with the choice of the specific desorption modality being readily selected and/or determinable without undue experimentation by those skilled in the art.

In the manufacture of the storage and dispensing system of the invention, the storage and dispensing vessel is cleaned, if required, to ensure the absence of any contaminants or species therein, including out-gassable species in the walls of the vessel, which may adversely impact the storage and dispensing operation subsequently carried out with the vessel. For this purpose, it may be desirable to bake out, solvent degrease, or otherwise subject the vessel and its interior surfaces to cleaning, removal or treatment steps, to provide an appropriately clean container for the subsequently installed sorbent material.

The sorbent material then is loaded into the interior volume of the storage and dispensing vessel, and the vessel is final assembled and sealed. The sorbent material may be cleaned or processed prior to its introduction to the vessel, so that the sorptive capacity of the sorbent medium is maximized. Additionally, or alternatively, the sorbent medium may be cleaned or processed in situ, to ensure maximum sorptive capacity, e.g., by bake-out of the vessel containing the sorbent, at sufficient elevated temperature and for sufficient time to desorb and clean the sorbent material of extraneous sorbate species. For example, the vessel may be evacuated (degassed) for an extended period of time, e.g., 48 hours, at a suitable elevated temperature, e.g., 200-400°C, using an appropriate vacuum pump or other evacuation means. After evacuation, the vessel is allowed to cool to room temperature over a suitable period of time, e.g., ∼6-12 hours.

After the evacuation/degas procedure, the evacuated sorbent container is connected to a sorbate fluid fill manifold. It will be recognized that the sorption of fluid species may involve significant exotherm due to heat of adsorption effects, and therefore it is desirable to maintain the vessel and sorbent material at suitable temperature so that the sorbate fluid is not desorbed by such heat effects after its initial take-up by the sorbent material.

In order to maintain an approximate isothermal condition, the cylinder may for example be immersed in a thermal ballast liquid, such as for example an aqueous ethylene glycol mixture maintained at a constant temperature of 25°C.

The sorbate fluid fill manifold may be evacuated prior to sorbate fluid dispensing to appropriately low pressure, e.g., to less than .133 Pa ($10^{-3}$ Torr), to remove non-condensable gases that may be present in the flow passages of the fill manifold. After such evacuation, the carbon sorbent-containing vessel may be filled with the sorbate fluid at a suitable rate until the desired pressure level is reached. For purposes of efficiency, it may be desirable to monitor the pressure of the vessel during the fill operation with a suitable pressure monitor or other (e.g., transducer-based) sensing means.

During the filling process, the temperature of the vessel and the thermal ballast tank may be independently monitored, along with the sorbate fluid temperature, for process control purposes. Pressure is monitored to determine the endpoint of the fill process.

It may be desirable to fill the vessel with the sorbate fluid in stages, and to allow equilibration of the system so that the temperature effects are at least partially dissipated to the ambient environment or to a heat transfer medium such as the thermal ballast liquid described hereinabove.

Alternatively, it may be suitable to fill the vessel to a specified pressure, and then allow the vessel to cool to a final temperature and pressure condition of the sorbent bed and associated vessel.

Thus, dose filling or continuous filling of the sorbate fluid may be carried out, to introduce the sorbate fluid into the vessel for sorptive take-up by the sorbent material therein. Following the fill sequence, the vessel, after its disengagement from the fill manifold, may be shipped, stored, or arranged for subsequent dispensing use by attachment to piping, coupling, and dispensing circuitry at the dispensing site.

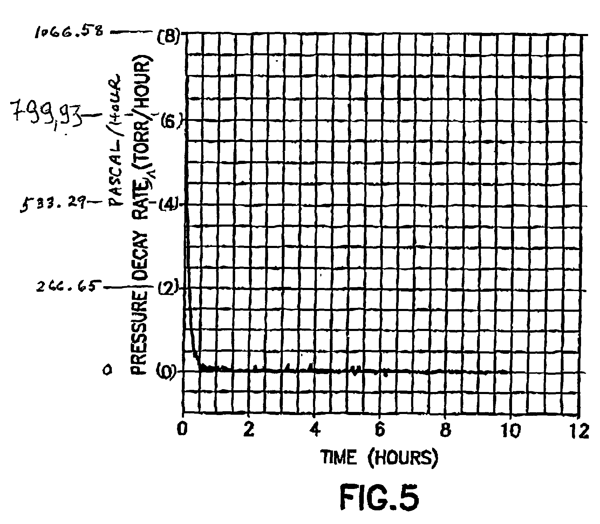

Figure 4 is a plot of cylinder pressure, in Pa (Torr), as a function of time, in hours, graphically showing the pressure decay of arsine gas on carbon sorbent in a storage and dispensing system according to the invention, after the termination of the arsine filling operation. As shown, the pressure in the sorbent-containing vessel decays from an initial pressure level of 99991.8 Pa (750 Torr) (at time zero) to 91725.8 Pa (688 Torr) after 10 hours.

The plot of Figure 4 shows the non-equilibrium condition existing in the vessel at the conclusion of the arsine fill operation. At such point, the heat of adsorption effects produce a relatively high pressure (in comparison to the final equilibrium pressure level after cooling). The subsequent pressure decay is due to the cooling of the sorbent bed and vessel after the termination of the fill operation. Accordingly, it is appropriate to assess the pressure level in the storage and dispensing vessel following the fill step, after the heat of adsorption effects have been dissipated.

Figure 5 is a plot of pressure decay rate, in Pa (Torr)/hour, as a function of time, in hours, for the arsine storage and delivery system according to the present invention, whose post-fill pressure characteristics are shown in Figure 4. Figure 5 shows the decay rate curve, which is determined as the derivative of the curve shown in Figure 4. The rate curve of Figure 5 shows that pressure fluctuations in the storage and dispensing vessel subside to a stable level as the decay rate approaches zero after about 2 hours.

Further, the plots of Figures 4 and 5 show that the pressure in the storage and dispensing vessel after sorbate gas fill is decreasing, not increasing, from which it can be inferred that the arsine sorbate is not decomposing in situ in the vessel. This is significant, in that sorbent materials may contain contaminants or trace species which can serve to mediate or promote the decomposition of sorbate gases such as arsine.

In order to assure the absence of undue decomposition of arsine or other sorbate gas species, it is desired that the carbon sorbent medium in the practice of the present invention be devoid of trace components, such as those selected from the group consisting of water, metals, and oxidic transition metal species (e.g., oxides, sulfites and/or nitrates), sufficient in concentration to decompose the sorbate fluid in said storage and dispensing vessel.

In the storage and dispensing system of the invention, the concentration on the carbon sorbent material (based on the weight of the carbon sorbent material) of trace components selected from the group consisting of water and oxidic transition metal species, desirably is insufficient to decompose more than 5%, and preferably more than 1% by weight of the sorbate fluid after 1 year at 25°C and said interior pressure.

This criterion ensures that sorbate fluids such as hydride gases, e.g., arsine, phosphine, etc., which are otherwise susceptible to decomposition in the presence of water, metals, and oxidic transition metal species (e.g., oxides, sulfites and/or nitrates), are maintained free of substantial exposure to such species, so that significant levels of decomposition of the sorbate gas, and resulting pressure buildup problems, are avoided.

Preferably, the concentration of trace components selected from the group consisting of water, metals, and oxidic transition metal species, based on the weight of the carbon sorbent material, is insufficient to cause decomposition of the sorbate fluid resulting in more than a 25% rise, and preferably more than a 10% rise, in interior pressure after 1 week at 25°C in the storage and dispensing vessel.

Carbon sorbent materials advantageously employed in the practice of the present invention include carbon materials which desirably contain less than 350, preferably less than 100, more preferably less than 10, and most preferably less than 1, part(s)-per-million by weight of trace components selected from the group consisting of water and oxidic transition metal species, based on the weight of the carbon sorbent medium.

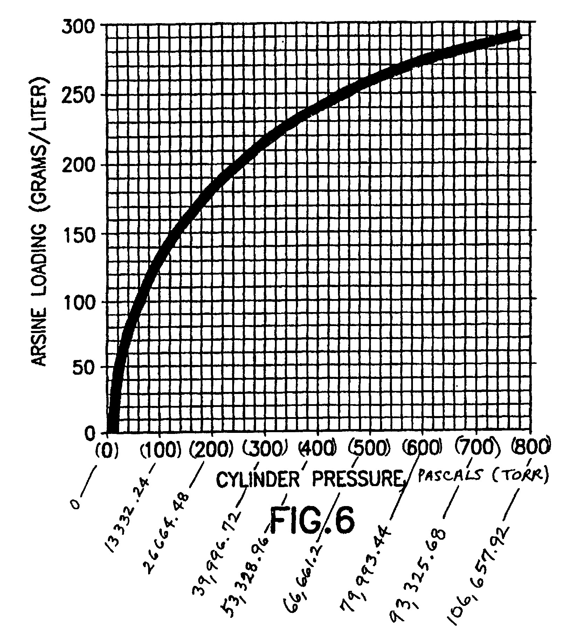

Figure 6 is a plot of an arsine adsorption isotherm, plotted as arsine loading, in grams/liter, as a function of storage and dispensing vessel pressure, in Torr, on a bead carbon sorbent material. From this adsorption isotherm, which has substantially the same shape as the arsine adsorption isotherm of Figure 1 (curve A), the working Sorbent Working Capacity, $C_w$, measured for arsine gas at 5332.90 (40 Torr) and at 86,659.56 Pa (650 Torr), measured as

$$C_w = \text{(Weight of arsine gas, in grams, on one liter of sorbent at 86,659.56 Pa (650 Torr) and 25° C)}$$

$$- \text{(Weight of arsine gas, in grams, on one liter of sorbent at 5332.90 Pa (50 Torr) and 25° C)}$$

is (278-70 = 208 grams arsine per liter of sorbent.

As discussed hereinabove, preferred carbon sorbent media in the practice of the present invention include sorbents having arsine (used as the reference measuring gas sorbate species) adsorption isotherms with a shape corresponding to the shape of the adsorption isotherm characteristic of curve A in Figure 1, which also is the adsorption isotherm shape shown in Figure 6.

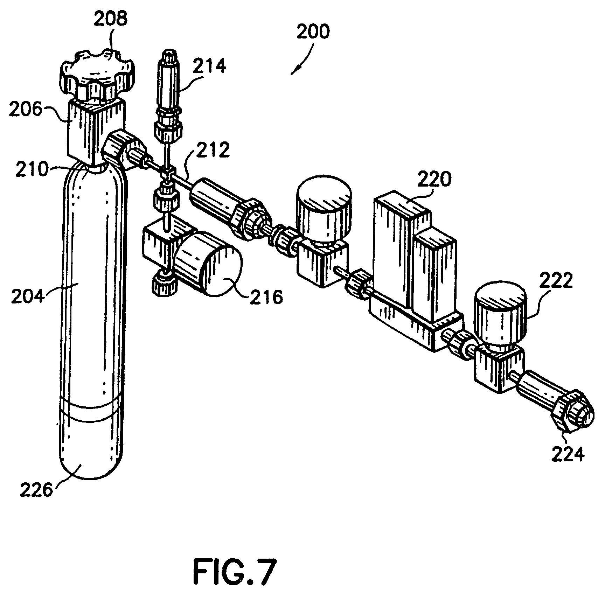

Figure 7 is a perspective schematic view of a storage and dispensing system 200 according to another embodiment of the invention.

As shown, the storage and dispensing system 200 comprises a storage and dispensing vessel 204 which is joined at its upper portion to a valve head 206 comprising part of a dispensing assembly including manual actuator 208 for the valve head on the cylinder. The valve head is joined by means of coupling 210 to a dispensing conduit 212 having disposed therein a pressure transducer 214, an inert purge unit 216 for purging the dispensing assembly with inert gas, a mass flow controller 220 for maintaining constant flow rate through the dispensing conduit 212 during the dispensing operation, and a filter 222 for removing particulates from the dispensed gas prior to its discharge from the dispensing assembly.

The dispensing assembly further comprises a coupling 224, for mateably engaging the dispensing assembly with downstream piping, valving, or other structure associated with the locus of use of the desorbed fluid.

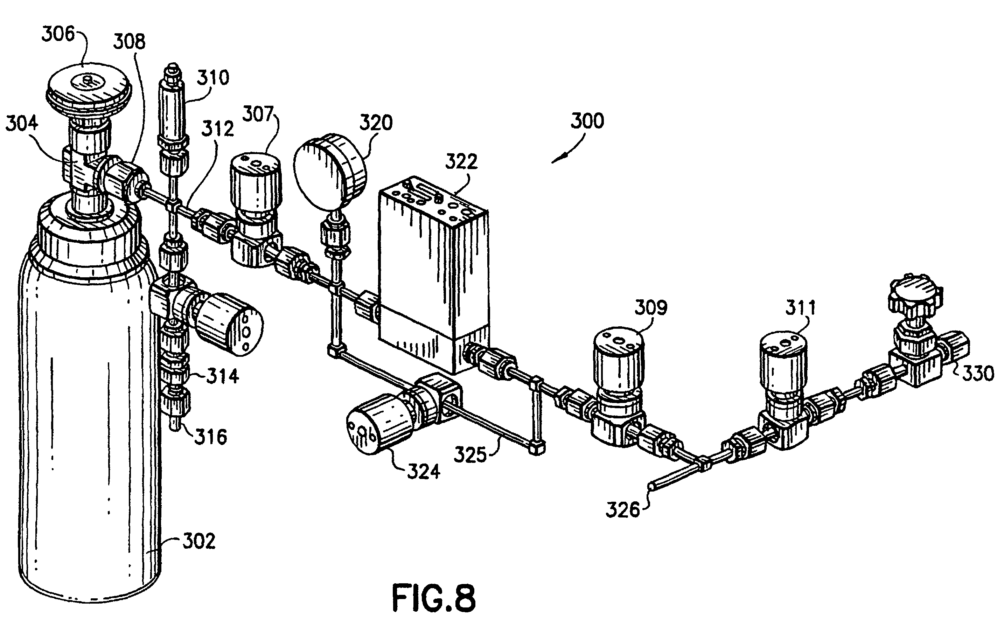

Figure 8 is a process system 300 including a storage and dispensing arrangement for delivery of gas, in accordance with one embodiment of the invention, for ion implantation use of the dispensed gas.

As shown, the apparatus includes a storage and dispensing vessel 302 having joined to its upper end a valve head 304 coupled with a manual valve actuator wheel 306. The valve head is coupled to a VCR filter gasket 308, which in turn is coupled with flow conduit 312. Flow conduit 312 communicates with the pressure transducer 310, as well as the check valve 314 and nitrogen purge inlet. The nitrogen purge inlet is employed for introduction of nitrogen or other purge gas for clearance of the dispensing assembly flow passages, for subsequent dispensing of gas from vessel 302.

Flow conduit 312 has further disposed therein a flow control valve 307, a span gauge 320, a flow controller 322 and flow control valve 309. The flow conduit 312 also is coupled in flow circuit-forming relationship to the bypass conduit 325 having by-pass valve 324 therein. The flow conduit 312 is joined at its right hand end as shown, to gas box manifold conduit 326. Conduit 326 has valve 311 positioned therein, and has a coupling 330 opposite the end communicating with the gas box manifold, for coupling of the storage and dispensing system with the ion implantation chamber.

In operation, gas from the sorbent bed (not shown) in storage and dispensing vessel 302 is flowed in flow conduit 312 and gas box manifold conduit 326 to the ion implantation chamber, at a controllable rate, as controlled by flow controller 322. The pressure transducer 310 may be operatively coupled in relationship to flow controller 322, as well as other elements, e.g., valves, in the flow circuit, to carry out the dispensing of the gas for ion implantation, in a suitable manner.

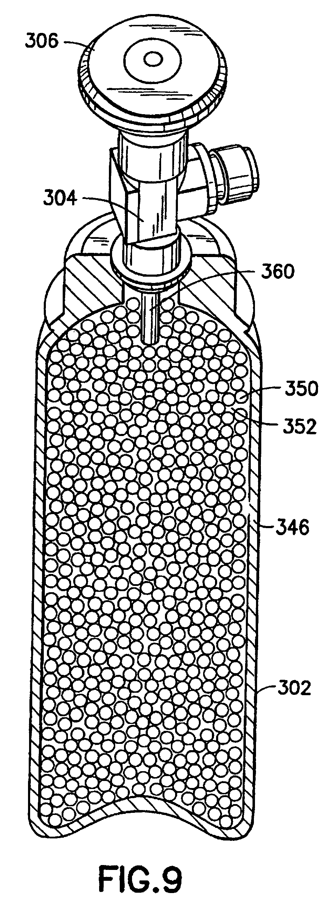

Figure 9 is a perspective cross-sectional view of the storage and dispensing vessel 302 of Figure 8, showing the interior structure of such vessel.

As shown, the vessel 302 comprises a wall 346 enclosing an interior volume 352 of the vessel, and containing a particulate sorbent material 350 therein. At the upper end of the vessel, at the port to which the valve head 304 is joined, the port may feature porous centered tube 360, or other foraminous or otherwise gas-permeable structure serving to preven entrainment in the dispensed gas of particulate solids from the bed of the sorbent material.

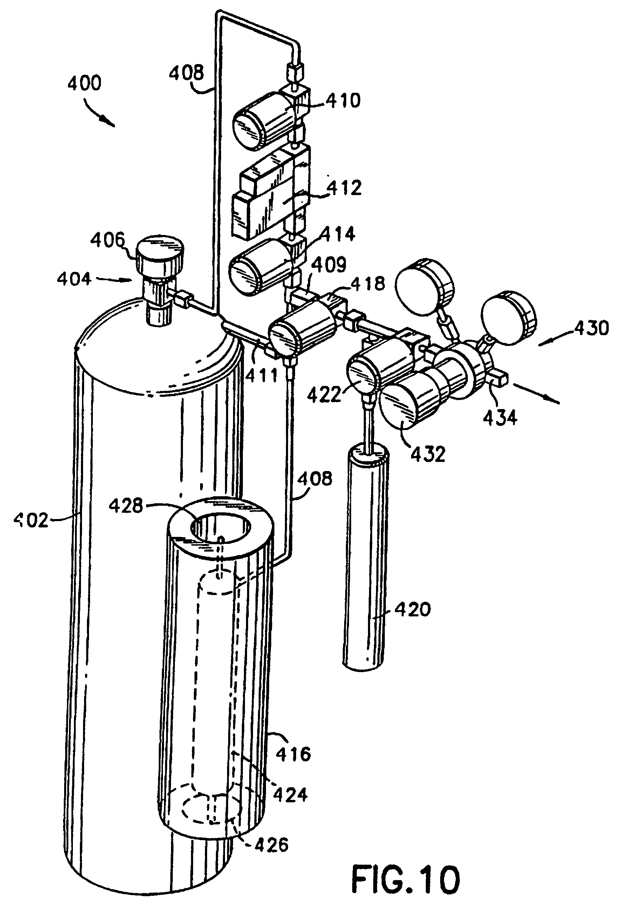

Figure 10 is a schematic perspective view of a cryopumping storage and delivery system apparatus according to a further embodiment of the invention.

Although the fluid storage and dispensing system of the present invention has been described hereinabove with reference to low pressure dispensing applications such as ion implantation, where the locus of use of the desorbed sorbate gas is at vacuum or very low pressure levels, it will be appreciated that the utility of the invention is not thus limited, but also encompasses applications in which the storage and dispensing vessel must furnish sorbate gas to a downstream use point at higher than atmospheric pressure.

For applications in which it is desired to provide gases for use at a higher-than-discharge pressure from the sorbent-containing vessel of the storage and delivery system, various pressure building circuits, pressurizing equipment, or other means or methods may advantageously be employed.

For example, venturi pumps may be provided to raise the pressure of the supplied gas to a selected pressure level above that at the cylinder head (of the cylinder containing the sorbent binding the gas being dispensed). Although such venturi pumping arrangements yield the dispensed gas at the selected higher pressure level, such arrangements nonetheless entail dilution of the gas being dispensed with a carrier gas, since the carrier gas is entrained with the dispensed gas from the cylinder.

Such carrier gas dilution effects may be satisfactory in some applications, however in some uses, these dilution effects may represent a significant constraint on the overall process system, e.g., in instances where neat gas of high purity is desired to be supplied from the storage and delivery system. Mechanical pumps may be used in place of venturi pumping means, but mechanical pumps entail the disadvantage of a significant number of moving parts, which can cause problems associated with the formation of particulates in the pump and/or entrainment of lubricants in the gas stream. Again, these may be tolerable concomitant effects in some applications, but in other uses, the supplied gas must be maintained at high purity and free of particulates or other extraneous material.

In instances where the gas supplied by the storage and delivery system must be furnished at high pressure in a high purity, neat condition, the provision of a cryopumping assembly in the storage and delivery system may be advantageous.

Figure 10 is a schematic perspective view of such a cryopumping storage and delivery system apparatus 400, according to a further embodiment of the invention.

In the cryopumping system, the main cylinder 402 contains a suitable carbon sorbent material (not shown), having loaded thereon a suitable sorbate gas species to be subsequently dispensed. Cylinder 402 is equipped with a valve head assembly 404 including main cylinder valve 406, which is in the "off" position at the start of the dispensing process.

The valve head 404 is coupled to conduit 408 containing isolation valve 410, mass flow controller 412, isolation valve 414, and cryopump 416. Conduit 408 is in turn coupled to conduit 409 containing isolation valves 418 and 422 and product dispensing regulator assembly 430 having discharge port 434 coupleable to a downstream process system. Joined to the conduit 409 is a medium pressure storage vessel 420.

The cryopump 416 coupled to conduit 408 is provided with a liquid nitrogen (or other suitable cryogenic liquid or fluid) inlet 428 and a liquid nitrogen outlet 426, with a liquid cryogen flow path being provided intermediate the inlet 428 and the outlet 426 which is circumscribed by heating elements 424 as shown. The liquid cryogen inlet and outlet of the cryopump may be suitably joined to a source of liquid cryogen, as for example a cryogenic air separation installation or a cryogenic cylinder source of liquid nitrogen or other coolant. The cryopump thereby forms a cryotrap apparatus. The outlet of the cryopump thus is provided with an isolation valve 422, and the medium pressure cylinder 420 is isolatable by means of the isolation valve 422.

A pressure transducer 411 is provided in conduit 408 and is coupled in pressure monitoring relationship to cylinder 402 for monitoring of pressure in the cylinder and responsively adjusting the isolation valve 418.

The operation of the storage and delivery system shown schematically in Figure 10 is illustrated below with reference to silane as the gas sorbed on the carbon sorbent in cylinder 402 and to be delivered at suitable elevated pressure, and nitrogen as the cryogen to be employed as the working fluid in the cryopump 416. Silane has a boiling point of -111.5 degrees Centigrade and a melting point of 185 degrees Centigrade, and nitrogen has a boiling point of -195.8 degrees Centigrade.

Silane has been selected for illustration purposes since it is relatively difficult to deliver at suitably elevated pressure (in relation to other hydridic gases such as arsine which have higher boiling and freezing points, and thus may be more easily cryopumped with less cryogenic cooling being required).

If at the outset valves 410, 414, and 406 are open, with valves 418 and 422 being closed and under vacuum, and the temperature in the cryogenic pump is lowered to liquid nitrogen temperatures, silane will condense and freeze in the cryopump, even if relatively low internal pressures exist in the supply cylinder 402.

The mass flow controller 412 allows for accurate determination of the quantity of gas being transferred to the cryopump 416. Such accurate determination is important because overpressurization of the cryopump is desirably avoided. Under such operating conditions, silane will be above its critical temperature so that the ultimate pressure in the cryopump can potentially become very high.

After the correct amount of gas has been transferred to the cryopump 416, the valves 410 and 414 are closed. The condensed silane then is warmed to near ambient temperatures. The heating is carried out by the heating means 424, which in the embodiment shown comprise band heaters but could be any suitable heating means appropriate for such service. The silane gas does not thereby have to be heated to high temperatures, and the stability and purity of the product gas to be dispensed is thereby enhanced, since heating may result in the occurrence of degradation of the silane gas with consequent adverse effect on its purity and further stability.

The pressure of the silane gas after the warm-up in the cryopump may become significantly elevated, and effectively the gas thereby has become compressed, in a high purity state, and without exposure to a mechanical pump with many moving parts, the use of which may otherwise result in contamination of the product gas.

The inventory of gases in the overall system may be quite low at this point, with most of the silane residing in the sorbent vessel, cylinder 402, at low pressure.

Opening valve 418 will then allow gas to flow into the medium pressure cylinder 420; if valve 422 is open, then product silane gas can flow to the downstream process through discharge port 434, as monitored by the monitoring means (e.g., flow pressure) associated with the regulator assembly 430. The regulator assembly 430 has associated pressure transducer 432 which may be operatively coupled in the overall system with the other valves and cryopump components so that the product gas is delivered at a selected pressure and volumetric flow rate.

Correspondingly, the various valves, mass flow controller, cryopump, transducers and regulator may be operatively interconnected in any suitable manner, e.g., with cycle timer, and process safety systems, to carry out the demand-based delivery of silane or other sorbate gases, in a readily controllable and reproducible manner.

Accordingly, the operation of the system schematically shown in Figure 10 desirably is timed to avoid disruption to or interference with downstream process flows. Signals from the mass flow controller and pressure transducers in the cryopump and medium pressure tanks can be used in an automated process system. The cryopump can be cycled to move gases from the storage and delivery system to the medium pressure cylinder 420 to maintain a constant pressure at the outlet of the regulator.

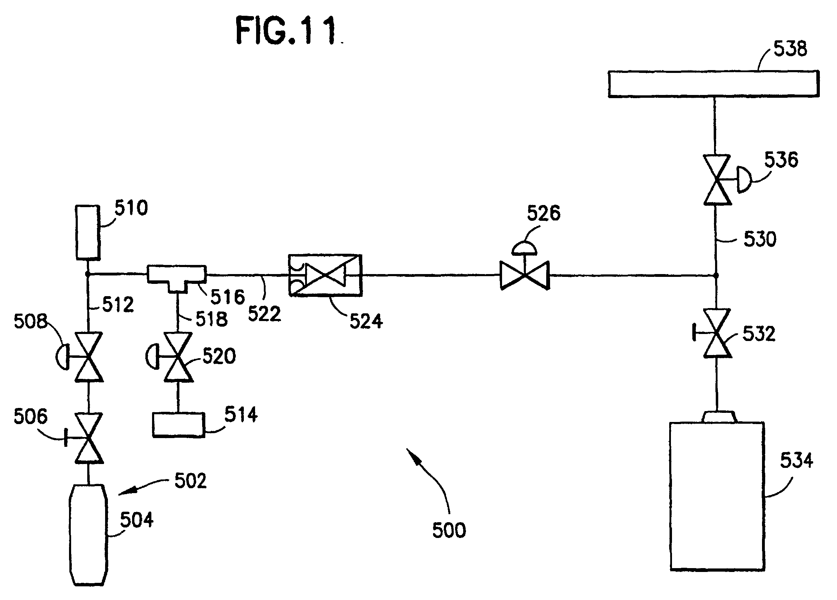

Figure 11 is a schematic representation of a delivery measurement apparatus 500 for evaluating the performance of a storage and dispensing system 502 according to the invention. The storage and dispensing system 502 comprises a storage and dispensing vessel 504 containing a sorbent material (not shown) and a fluid dispensing assembly comprising discharge flow line 512 having cylinder valve 506, gas cylinder isolation valve 508, and (0-1000 Torr) pressure transducer 510 disposed therein and arranged as shown.

Line 512 is connected by suitable connector means to connection line 522 having T-connector 516 therein joining inert gas purge line 518 containing inert gas purge isolation valve 520 connected to inert purge gas source 514. Line 512 also contains mass flow controller 524 therein for maintaining constant pressure and flow rate in the connection line 522. A gas on/off valve 526 in line 512 serves to selectively flow gas through line 522 to line 530 joined by connector means to line 522.

Line 530 is connected at one end to a vacuum system 538 and to a liquid nitrogen chilled receiver vessel 534 at its opposite end. Intermediate the respective ends, are disposed valves 536 and 532 as illustrated.

The delivery measurement apparatus shown in Figure 11 permits the flow of sorbate fluid out of the storage and dispensing vessel 504 at a controlled rate by means of the mass flow controller 524. The desorbed and dispensed gas is then collected in liquid nitrogen chilled receiver vessel 534, after flow though lines 512, 522, and 530 to such vessel, by appropriate closed/opened settings of the appropriate valves in the various lines of the overall system.

At liquid nitrogen temperatures, the vapor pressure of the sorbate gas is essentially zero Torr, which permits desorption of the sorbate fluid from the carbon sorbent medium even at low storage and dispensing vessel pressures. The experiment is typically run until the test vessel 504 is at a pressure on the order of ~6666.12 Pa (~50 Torr). At such point, there is typically insufficient pressure differential to sustain a suitable flow rate (~5 sccm) through the mass flow controller.

The quantities of the sorbate fluid flowed from vessel 504 to the chilled receiver 534 then is determined by independently totalizing the mass flow (using mass flow controller 524) and by weighing the storage and dispensing vessel 504 before and after desorption has been carried out.

In a illustrative experiment using the delivery measurement system of Figure 11, arsine gas is dispensed from a storage and dispensing vessel containing as the sorbent a carbon material having the characteristics of Table I herein. The results of this experiment are shown in Table 2 below.

Table 2

| Desorption Capacities of Arsine from Bead Activated Carbon | |
| --- | --- |
| Desorption Capacity by Mass Flow Controller Measurement | 132 grams of Arsine per Liter of Adsorbent |
| Desorption Capacity by Weight Difference Determination | 166 grams of Arsine per Liter of Adsorbent |
| Post-Desorption Adsorption Capacity | 167 grams of Arsine per Liter of Adsorbent |

The foregoing adsorption/desorption capacity data reflect an approximately two-fold improvement over a corresponding storage and delivery system utilizing a typical molecular sieve sorbent material such as 5A molecular sieve, and further evidence the substantial and unexpected character of the present invention relative to the prior art.

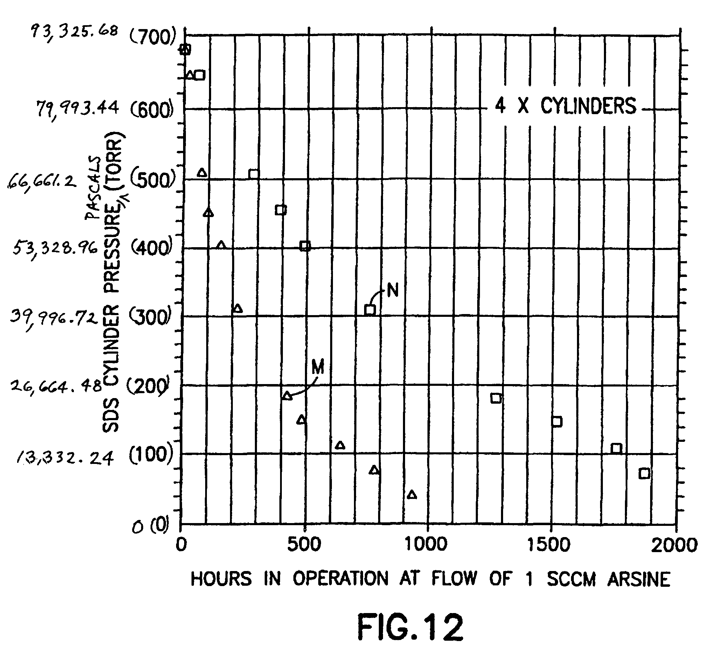

Figure 12 is a graph of performance of a storage and delivery system comprising 5A molecular sieve as the sorbent material (curve M, data point symbol △) and a storage and dispensing system comprising bead activated carbon as the sorbent material (curve N, data point symbol □), showing pressure in the storage and dispensing vessel, in Pa (Torr), as a function of hours in operation at a flow rate of 1 standard cubic centimeter arsine per minute. These curves show that at a constant flow rate of 1 seem dispensing of arsine, a storage and dispensing system comprising bead activated carbon (curve N) provides an improvement in dispensing service life approaching 2000 hours and that the storage and dispensing system of curve M has a dispensing service life approaching 1000 hours.

The storage and delivery system apparatus and method of the invention provide a significantly safer alternative to the current use of high pressure gas cylinders for the storage and dispensing of sorbable gases. The invention provides the capability to transport, store and deliver sorbable fluids from a cylinder or other vessel at zero Pa.

With only low level heating of the sorbent material in the practice of the present invention, by so-called thermally assisted delivery, it is possible to augment the delivery rate of the desorbing gas, so that flow rates of up to 500 sccm and higher are readily achievable. Nonetheless, high rates of gas delivery are achieved in the broad practice of the present invention with adiabatic operation (no supplemental input of heat or thermal energy to the sorbate-laden sorbent medium), solely by the pressure differential existing between the sorbent vessel and the reduced pressure of the external dispensing locus, e.g., in a semiconductor or other industrial or manufacturing process facility, such as an ion implantation chamber, molecular beam epitaxy unit, or chemical vapor deposition reactor.

The apparatus of the present invention may be readily provided in a unitary apparatus form, as for example by disposing one or more storage and dispensing systems of the invention in a gas cabinet. In such gas cabinet arrangement involving a multiplicity of sorbent vessels, each of the vessels may be manifolded together for selective delivery of sorbate gas from one or more of such vessels. The cabinet may further include therein independent thermocouples, or other temperature sensing/ monitoring equipment and components, for preventing overheating of the vessels and/or other internal components of the gas cabinet, in use thereof.

Such gas source cabinet may additionally include a fusible link heater element for selective augmentive heating of the vessels and sorbent therein; a sprinkler system; an exhaust heat sensor; a toxic gas monitor which functions to shut down the apparatus when toxic gas is sensed; a scrubber or bulk sorption device; and redundant pressure and temperature control means. With such a storage and delivery system apparatus, delivery rates of gas of 500 sccm at 1999.8 Pa (15 psig) are readily attainable.

In the preferred practice of the invention, the solid-phase carbon physical sorbent medium is devoid of trace components selected from the group consisting of water, metals, and oxidic transition metal species in a concentration which is insufficient to decompose the sorbate fluid in the storage and dispensing vessel. In this respect, it is to be noted that the significant presence in the sorbent material of any water, metals, or transition metal oxides tends to promote undesirably high levels of decomposition of the sorbate gas.

The solid-phase carbon physical sorbent medium in the preferred practice of the invention therefore contains less than 350 parts-per-million by weight of trace components selected from the group consisting of water and oxidic transition metal species, based on the weight of the physical sorbent medium, more preferably less than 100 parts-per-million by weight, still more preferably less than 10 parts-per-million, and most preferably no more than I part-per-million by weight of trace components selected from the group consisting of water and oxidic transition metal species, based on the weight of the carbon physical sorbent medium.

Correspondingly, the solid-phase carbon physical sorbent medium concentration of trace components selected from the group consisting of water and oxidic transition metal species (e.g., oxides, sulfites and nitrates), based on the weight of the physical sorbent medium, preferably is insufficient to decompose more than 5% by weight of the sorbate gas after 1 year at 25°C and interior pressure conditions.

The features and advantages of the invention are more fully shown by the following non-limiting examples.

## EXAMPLE I

74.7 grams(130 ml) of Kureha carbon was loaded into a clean 150 ml Hook stainless steel sample cylinder. The cylinder was fitted with a Nupro DS series diaphragm valve. The valve inlet port was modified so that a 30 micron Mott Metallurgical sintered metal polymer filter could be installed. The polymer filter served to contain the carbon particles inside the sample cylinder.

The cylinder was then evacuated (degassed) for 48 hours at a temperature of 300°C. The vacuum pump (Alcatel Molecular Drag Pump) used for degassing had an ultimate pressure of $1.33 \times 10^{-4}$ Pa ($1 \times 10^{-6}$ Torr). After the degassing period, the cylinder was allowed to cool, at room temperature, for ~6 hours.

The general properties of the Kureha carbon used are shown in Table 1 hereinabove.

The results of the degas procedure are shown in the Table 3 below:

Table 3

| Carbon Sorbent Degassing Characteristics | |
|---|---|
| Cylinder Tare Weight | 1195.4 Grams |
| Cylinder Weight + Carbon | 1270.1 Grams |
| Cylinder Weight + Carbon after Degas | 1268.1 Grams |
| Mass of Volatiles Removed by Degas | 2.0 Grams |
| Carbon Weight Wet | 74.7 Grams |
| Carbon Weight Dry | 72.7 Grams |
| Carbon Volume Wet | 130 ml |

## EXAMPLE II

After the degas procedure of Example I, the evacuated carbon sample cylinder was connected to an arsine filling portion of an arsine fill manifold. In order to maintain an approximate isothermal condition, the cylinder was immersed into a dewar flask containing an ethylene glycol mixture held constant at 25°C. The fluid was circulated through the dewar flask using a Neslab RTE-100 recirculating constant temperature bath.

The entire manifold was then evacuated to less than 0.133 Pa ($10^{-3}$ Torr) to remove non-condensable gases. After evacuation, the carbon sample was filled at with arsine at a rate of 25 sccm until the a pressure of 101,325 Pa (760 Torr) was attained. The pressure was monitored using a MKS 0-1000 Torr Baratron pressure transducer. During the filling process, the dewar flask temperature, the carbon cylinder pressure, and the ambient hood temperature (of the hood environment in which the fill took place) were monitored and logged using a Fluke electronic data logger.

A fill rate of 25 sccm was chosen in order to speed up the time it took to measure the adsorption capacity. However it was not possible to attain a true isotherm due to heat of adsorption effects. Even though the cylinder was immersed in a constant temperature fluid, the rate of heat exchange between the fluid and the adsorbent was not sufficiently rapid, which resulted in an artificially high pressure during the fill process. This is shown in **Figure 4** which evidences a non-equilibrium condition subsequent to filling.

This pressure decay was attributed to the cooling of the adsorption bed after termination of arsine flow. The heat evolved in the bed during the filling process was due to the heat of adsorption. Typically, a true isotherm is obtained by allowing the adsorption process to reach equilibrium before attaining a pressure data point. **Figure 5** shows the derivative of the curve from **Figure 4** which yields the pressure decay rate. The rate curve shows that pressure fluctuations subside to a stable level as the decay rate approaches zero in about 2 hours. Critically important, the pressure is not increasing, evidencing that the arsine is not decomposing.

An approximate isotherm was constructed and is shown in **Figure 4** hereof.

The adsorption capacity was quantified by integrating the mass flow rate of arsine for the duration of the experiment. The endpoint of the adsorption measurement is taken as 101,325 Pa (760 Torr), or (1 atmosphere). The adsorption capacity was also verified by mass, by taking the difference between the tare weight of the unfilled cylinder and the full cylinder at an arsine loading of 101,325 Pa (760 Torr). The results for the adsorption capacity measurements are shown in Table 4.

Table 4

| Adsorption Capacity Results | |
|---|---|
| Tare Weight of Empty Adsorption Cylinder | 1268.1 Grams |
| Weight of Cylinder after Filling with Arsine to 101,325 Pa (760 Torr) | 1307.3 Grams |
| Grams Arsine Adsorbed Per Liter of Carbon By Weight | 301.5 Grams |
| Grams Arsine Per Liter By Totalizing Mass Flow | 290.63 Grams |

The prior art arsine storage and delivery system technology based on the adsorption of arsine on zeolite molecular sieve sorbent, has been demonstrated to have a hydrogen production rate of about 666.6 (5 Torr) per day. The present invention utilizes carbon sorbent materials which are distinguishable compositionally and functionally from the zeolite molecular sieve materials, and which have been shown to possess a high degree of stability and freedom from decomposition effects of the sorbate species.

Accordingly, consistent with the improved working capacity, desorption, and other functional characteristics of the carbon sorbent in the storage and dispensing system of the invention, it is evident that the system of the invention achieves a marked advance in the art over zeolite-based storage and dispensing systems, as well as the prior art practice of dispensing gas materials from high pressure cylinders.

The storage and dispensing system of the present invention may be operatively connected with any suitable downstream process, for utilization of the dispensed gas. For example, the storage and dispensing system may be joined in flow supply relationship to an ion implantation chamber, a silicon semiconductor processing plant, a compound semiconductor processing plant, a flat panel display manufacturing facility, organic synthesis equipment, a pharmaceutical manufacturing facility, a dispensing mask for anaesthesia gas, and air treatment or water pollution abatement facility, a stove or burner in the case of cooking gases, or any other suitable downstream means or process facility, for end use of the gas dispensed from the storage and dispensing system of the invention.

The storage and dispensing system of the invention may be utilized for delivery of liquids as well as gases, vapors, multicomponent and multiphase fluid streams, etc. The storage and dispensing system may also be employed for dispensing of sublimable solids, and the storage and dispensing system may be coupled with reaction vessels serving to react the dispensed fluid to an intermediate or final product for ultimate usage. For example, the storage and dispensing system may dispense boran trifluoride gas to a downstream hydrogenation chamber, in which the boran trifluoride is contacted under appropriate reaction conditions with a hydrogenating agent such as magnesium hydride, to yield diborane, for subsequent use, e.g., ion implantation, doping, or other usage.

Ion implantation is a particularly preferred application for the storage and dispensing system of the invention, and in the dispensing of diborane, germane, silicon tetrafluoride, and antimony-containing gases.

For thermally assisted desorption of the sorbable fluid from the sorbent bed in the storage and dispensing vessel, any suitable energy source may be employed to effect such heating, including RF, IR, and UV radiation, ultrasonic and microwave radiation, as well as heating by other direct and indirect means and methods, such as electrical resistance heating, deployment of extended heat transfer surface or heat exchange passages in the sorbent bed, etc.

The present invention has utility in the manufacture of semiconductor materials and devices, and in other gas-consuming process operations, where it provides a reliable "on demand" source of gas, e.g., hydride gases, halide gases, gaseous organometallic Group V compounds, etc., including, for example, silane, diborane, germane, fluorine, ammonia, phosphine, arsine, stibine, hydrogen sulfide, hydrogen selenide, hydrogen telluride, boron trifluoride, boron trifluoride, tungsten hexafluoride, chlorine, hydrogen chloride, hydrogen bromide, hydrogen iodide, and hydrogen fluoride.

By providing an economical and reliable source of such gases, in which the gas is safely held at relatively low pressure in the adsorbed state on a carbon sorbent medium, and subsequently is easily dispensed to the point of use of the gas, the present invention avoids the hazards and gas handling problems associated with the use of conventional high pressure gas cylinders.

**Claims**

1. An adsorption-desorption apparatus, for storage and dispensing of a sorbable fluid, including a storage and dispensing vessel (10) constructed and arranged for holding a solid-phase physical sorbent medium, and for selectively flowing fluid into and out of said vessel; a solid-phase carbon physical sorbent medium (350) disposed in said storage and dispensing vessel at an interior sorbable fluid pressure; and a dispensing assembly (12, 14, 16), with the adsorption-desorption apparatus being arranged for selective dispensing of said sorbable fluid by at least one of (a) pressure differential desorption of the sorbable fluid from said solid-phase physical sorbent medium and (b) thermal desorption of the sorbable fluid from said solid-phase physical sorbent medium, **characterised in that** said solid-phase physical sorbent medium has

   (i) a Sorbent Working Capacity, $C_w$, measured for arsine gas at 5,332.90 Pascals (40 Torr) and at 86,659.56 Pascals (650 Torr), of at least 50,
   {ii} a pore volume in the range of from about 0.1 to about 5.0 cubic centimeters of pore volume per gram of sorbent material,
   {iii} more than 50% of its pore volume comprised of pores having a diameter in a range of from about 0.2 nanometer (2 Angstroms) to about 10 nanometers (100 Angstroms), and
   {iv} an average pore diameter in a range of from about 0.2 nanometer (2 Angstroms) to about 2.0 nanometers (20 Angstroms).

2. The apparatus of claim 1, wherein the carbon sorbent material has an adsorption isotherm for arsine gas, at 25°C, as a function of pressure, satisfying the following adsorption loading characteristic:

| Pressure, Pascals (Torr) | Loading (grams arsine /liter of sorbent): |
|---|---|
| 3333.06 (25) | 35-60 |
| 6666.12 (50) | 75-100 |
| 13332.24 (100) | 100-115 |
| 26664.48 (200) | 160-175 |
| 39996.72 (300) | 200-220 |
| 53328.96 (400) | 225-245 |
| 66661.2 (500) | 240-260 |
| 73327.32 (550) | 250-275 |
| 86659.56 (650) | 260-300. |

3. The apparatus of claim 1, wherein the carbon sorbent material has a pore volume in the range of from about 0.2 to about 2.0 cubic centimeters of pore volume per gram of sorbent material.

4. The apparatus of claim 1 as adapted for dispensing of the sorbable fluid, wherein the vessel has been charged with a sorbable fluid for which said solid-phase physical sorbent medium has adsorptive affinity.

5. The apparatus of claim 4, wherein said sorbable fluid is arsine.

6. The apparatus of claim 1, wherein the carbon sorbent material has a Percent Desorbable Sorbate of the carbon sorbent material for arsine gas of at least 15%.

7. The apparatus of claim 1, wherein the carbon sorbent material has the following adsorption loading characteristic:

| Pressure, Pascals (Torr) | Loading (grams of arsine/ liter of sorbent) of at least: |
|---|---|
| 3333.06 (25) | 35 |
| 6666.12 (50) | 75 |
| 13332.24 (100) | 100 |
| 26664.48 (200) | 160 |
| 39996.72 (300) | 200 |
| 53328.96 (400) | 225 |
| 66661.2 (500) | 240 |
| 73327.32 (550) | 250 |
| 86659.56 (650) | ~300. |

8. The apparatus of claim 1, wherein the carbon sorbent material has more than 80% of its pore volume comprised of pores having a diameter in the range, of from 0.2 nanometers (2 Angstroms) to 10 nanometers (100 Angstroms).

9. Apparatus according to claim 1, wherein the sorbent material has at least 50% of the pore volume within a range of from 0.2 nanometers to 2 nanometers (2 to 20 Angstroms).

10. Apparatus according to claim 1, wherein the sorbent material has at least 80% of the pore volume within a range of from 0.2 nanometers to 2 nanometers (2 to 20 Angstroms).

11. Apparatus according to claim 1, wherein the sorbent material has substantially all of the pore volume within a range of from 0.2 nanometers to 2 nanometers (2 to 20 Angstroms).

12. Apparatus according to claim 1, wherein the sorbent material has has an average pore diameter within a range of from 0.2 nanometers to 2 nanometers (2 to 20 Angstroms).

13. Apparatus according to claim 1, wherein the sorbent material has a Sorbent Working Capacity, Cw, measured for arsine gas at 5,332.90 Pascals (40 Torr) and at 86,659.56 Pascals (650 Torr), of at least 100.

14. Apparatus according to claim 1, wherein the sorbent material has a Sorbent Working Capacity, Cw, measured for arsine gas at 5,332.90 Pascals (40 Torr) and at 86,659.56 Pascals (650 Torr), of at least 180.

15. Apparatus according to claim 1, wherein the sorbent material has a Sorbent Working Capacity, Cw, measured for arsine gas at 5,332.90 Pascals (40 Torr) and at 86,659.56 Pascals (650 Torr), of at least 200.

16. Apparatus according to claim 1, wherein the sorbent material has a conformation selected from the group consisting of beads, granules, pellets, tablets, powders, particulates, extrudates, cloth, web form materials, honeycomb matrix monolith, composites of the carbon sorbent with other components, and comminuted and crushed forms of said conformations of sorbent materials.

17. Apparatus according to claim 1, wherein the sorbent material comprises a bead activated carbon material.

18. Apparatus according to claim 17, wherein the carbon sorbent material comprises a bead activated carbon material with a particle size in the range of from 0.1 millimeter to 1 centimeter diameter.

19. Apparatus according to claim 18, wherein the carbon sorbent material comprises a bead activated carbon material with a particle size in the range of from 0.25 to 2 millimeters diameter.

20. Apparatus according to claim 1, wherein the sorbent material is devoid of trace components selected from the group consisting of water, metals, and oxidic transition metal species sufficient in concentration to decompose the sorbable fluid in said storage and dispensing vessel.

21. Apparatus according to claim 20, wherein the concentration on the sorbent material of trace components selected from the group consisting of water and oxidic transition metal species, is insufficient to decompose more than 5% by weight of the sorbable fluid after 1 year at 25°C and said interior pressure.

22. Apparatus according to claim 20, wherein the concentration on the sorbent material of trace components selected from the group consisting of water and oxidic transition metal species, is insufficient to decompose more than 1% by weight of the sorbable fluid after 1 year at 25°C and said interior pressure.

23. Apparatus according to claim 20, wherein the concentration on the sorbent material of trace components selected from the group consisting of water, metals, and oxidic transition metal species, based on the weight of the carbon sorbent material, is insufficient to cause decomposition of the sorbable fluid resulting in more than a 25% rise in interior pressure after 1 week at 25°C in the storage and dispensing vessel.

24. Apparatus according to claim 20, wherein the concentration on the sorbent material of trace components selected from the group consisting of water, metals, and oxidic transition metal species, based on the weight of the carbon sorbent material, is insufficient to cause decomposition of the sorbable fluid resulting in more than a 10% rise in interior pressure after 1 week at 25°C in the storage and dispensing vessel.

25. Apparatus according to claim 20, wherein the sorbent material contains less than 350 part(s)-per-million by weight of trace components selected from the group consisting of water and oxidic transition metal species, based on the weight of the carbon sorbent material.

26. Apparatus according to. claim 20, wherein the sorbent material contains less than 100 part(s)-per-million by weight of trace components selected from the group consisting of water and oxidic transition metal species, based on the weight of the carbon sorbent material.

27. Apparatus according to claim 20, wherein the sorbent material contains less than 10 part(s)-per-million by weight of trace components selected from the group consisting of water and oxidic transition metal species, based on the weight of the carbon sorbent material.

28. Apparatus according to claim 20, wherein the sorbent material contains less than 1 part-per-million by weight of trace components selected from the group consisting of water and oxidic transition metal species, based on the weight of the carbon sorbent material.

29. Apparatus according to claim 1, wherein the sorbable fluid is selected from the group consisting of silane, diborane, arsine, phosphine, phosgene, chlorine, $BCl_3$, $BF_3$, $B_2D_6$, tungsten hexafluoride, $(CH_3)_3Sb$, hydrogen fluoride, hydrogen chloride, $GeF_4$, $SiF_4$, hydrogen iodide, hydrogen bromide, hydrogen cyanide, germane, ammonia, stibine, hydrogen sulfide, hydrogen selenide, hydrogen telluride, and $NF_3$.

30. Apparatus according to claim 1, wherein the sorbent material has a different adsorbent material on its surface to improve the adsorption.

31. Apparatus according to claim 30, wherein the different material enhances (1) sorption of a specific fluid on the sorbent medium when the sorbent is originally loaded with the fluid to be subsequently dispensed, and/or (2) desorption of the fluid when the sorbent is subjected to process conditions for dispensing the fluid from the storage and dispensing vessel.

32. Apparatus according to claim 1, wherein the sorbent material has a coating of carbowax on the surfaces thereof to enhance the sorptive character of the material.

33. Apparatus according to claim 1, further comprising a chemisorbent material in the storage and dispensing vessel having affinity for contaminants that are adverse to sorptive efficacy of the sorbent material.

34. Apparatus according to claim 33, wherein said chemisorbent is selected from the group consisting of:

(A) scavengers including a support having associated therewith, but not covalently bonded thereto, a compound which in the presence of such contaminant provides an anion which is reactive to effect the removal of such contaminant, said compound being selected from one or more members of the group consisting of:

(i) carbanion source compounds whose corresponding protonated carbanion compounds have a $pK_a$ value

of from about 22 to about 36; and

(ii) anion source compounds formed by reaction of said carbanion source compounds with the sorbate gas; and

(B) scavengers comprising:

(i) an inert support having a surface area in the range of from 50 to 1000 square meters per gram, and thermally stable up to at least 250°C; and

(ii) an active scavenging species, present on the support at a concentration of from about 0.01 to about 1.0 moles per liter of support, and formed by the deposition on the support of a Group IA metal selected from sodium, potassium, rubidium, and cesium and their mixtures and alloys and pyrolysis thereof on said support.

35. Apparatus according to claim 33, wherein said chemisorbent is selected from the group consisting of trityllithium and potassium arsenide.

36. Apparatus according to claim 33, wherein said chemisorbent is present as a separate bed of chemisorbent material in fluid flow communication with the sorbent material in said storage and dispensing vessel.

37. Apparatus according to claim 33, wherein said chemisorbent is dispersed in the sorbent material in the storage and dispensing vessel.

38. Apparatus according to claim 1, wherein said interior sorbable fluid pressure is less than 159,986.88 Pascals (1200 Torr).

39. Apparatus according to claim 38, wherein said sorbable fluid is selected from the group consisting of gas, vapor, liquid, multiphase fluid, and fluid mixtures.

40. Apparatus according to claim 38, wherein said sorbable fluid is selected from the group consisting of hydrides, deuterated hydrides, halides, halide gaseous compounds, organo compounds, and organometallic compounds.

41. Apparatus according to claim 1, wherein said sorbent material is of bead activated carbon having a diameter in the range of from 0.1 to about 1 centimeter.

42. Apparatus according to claim 1, further comprising a cryopump (416) joined to the dispensing assembly (404, 406, 408, 410) for pressurizing the desorbed gas and discharging the resultingly pressurized gas.

43. Apparatus according to claim 1, wherein the dispensing assembly (12, 14, 16) is joined in gas flow communication with an ion implantation system (52).

44. Apparatus according to claim 1, wherein the dispensing assembly (12, 14, 16) is joined in flow communication with a semiconductor manufacturing facility.

45. A process for providing a fluid reagent, comprising:

providing an adsorption/desorption apparatus of claim 1, wherein the dispensing assembly comprises a selectively actuatable dispensing valve (14);
charging the storage and dispensing vessel (10) with a sorbable fluid for which said solid-phase physical sorbent medium has sorptive affinity;
storing the sorbable fluid in the storage and dispensing vessel with the dispensing valve in a closed state; and
selectively dispensing said sorbable fluid by opening said dispensing valve to discharge a selected amount of the sorbable fluid from the storage and dispensing vessel.

46. A process according to claim 45, wherein the fluid reagent comprises a fluid selected from the group consisting of silane, diborane, arsine, phosphine, chlorine, $BCl_3$, $BF_3$, $B_2D_6$, tungsten hexafluoride, $(CH_3)_3Sb$, hydrogen fluoride, hydrogen chloride, deuterated hydrides, $GeF_4$, $SiF_4$, hydrogen iodide, hydrogen bromide, germane, ammonia, stibine, hydrogen sulfide, hydrogen selenide, hydrogen telluride, $NF_3$, and mixtures thereof.

47. A process according to claim 45, wherein the reagent fluid is an organometallic compound that comprises a metal moiety selected from the group consisting of aluminum, barium, strontium, gallium, indium, tungsten, antimony, silver, gold, palladium, gadolinium, calcium, lithium, potassium, cesium, titanium, yttrium, zirconium, lead, tantalum, niobium, vanadium, platinum, thallium, bismuth, tin, tellurium, selenium, nickel, zinc, tungsten, manganese, iron, cobalt, molybdenum, magnesium, scandium, chromium, copper, cadmium, lanthanum, and cerium.

48. A process according to claim 45, further comprising cryopumping the desorbed fluid from the storage and dispensing vessel to a predetermined pressure, wherein such predetermined pressure is higher than the pressure of the desorbed fluid flowed out of the storage and dispensing vessel.

49. A process according to claim 45, further comprising flowing the desorbed sorbable fluid from the storage and dispensing vessel to an ion implantation zone.

50. A process according to claim 45, further comprising flowing the desorbed sorbable fluid from the storage and dispensing vessel to a semiconductor manufacturing facility.

**Patentansprüche**

1. Adsorptions-Desorptions-Gerät zur Speicherung und Abgabe eines sorbierbaren Mediums, mit einem Speicher- und Abgabegefäß (10), das zur Aufnahme eines physikalischen Festphasen-Sorptionsmittels und für das wahlweise Strömen von Medium in das und aus dem Gefäß konstruiert und ausgelegt ist, ein in dem Speicher- und Abgabegefäß unter einem Innendruck für das sorbierbare Medium untergebrachten physikalischen Festphasen-Kohlenstoff-Sorptionsmittel (350), und einer Abgabebaugruppe (12, 14, 16), wobei das Adsorptions-Desorptions-Gerät für die selektive Abgabe des genannten sorbierbaren Mediums durch mindestens einen der Mechanismen a) Druckdifferenzdesorption des adsorbierbaren Mediums aus dem physikalische Festphasen-Sorptionsmittels und b) thermische Desorption des sorbierbaren Mediums aus dem physikalische Festphasen-Sorptionsmittels ausgelegt ist, **dadurch gekennzeichnet, daß** das physikalische Festphasen-Sortpionsmittel

   i) eine Sorptionsmittelarbeitskapazität Cw, für Arsingas gemessen bei 5332,90 Pascal (40 Torr) und bei 86.659,56 Pascal (650 Torr) von mindestens 50 aufweist,

   ii) ein Porenvolumen im Bereich von etwa 0,1 bis etwa 5,0 Kubikzentimeter Porenvolumen pro Gramm Sorptionsmaterial aufweist,

   iii) wobei mehr als 50% des Porenvolumens aus Poren mit einem Durchmesser im Bereich von etwa 0,2 Nanometer (2 Angström) bis etwa 10 Nanometer (100 Angström) haben, und

   iv) einen mittleren Porendurchmesser im Bereich von etwa 0,2 Nanometer (2 Angström) bis etwa 2,0 Nanometer (20 Angström) aufweist.

2. Gerät nach Anspruch 1, wobei das Kohlenstoff-Sorptionsmaterial eine Adsorptionsisotherme für Arsingas, bei 25°C, als Funktion des Drucks aufweist, welche die folgende Adsorptionsladecharakteristik erfüllt:

| Druck, Pascal (Torr) | Beladung (Gramm Arsin/ Liter Sorptionsmittels) |
|---|---|
| 3333,06 (25) | 35-60 |
| 6666,12 (50) | 75-100 |
| 13332,24 (100) | 100-115 |
| 26664,48 (200) | 160-175 |
| 39996,72 (300) | 200-220 |
| 53328,96 (400) | 225-245 |
| 66661,2 (500) | 240-260 |
| 73327,32 (550) | 250-275 |
| 86659,56 (650) | 260-300. |

**3.** Gerät nach Anspruch 1, wobei das Kohlenstoff-Sorptionsmaterial ein Porenvolumen im Bereich von etwa 0,2 bis etwa 2,0 Kubikzentimeter Porenvolumen pro Gramm Sorptionsmaterial aufweist.

**4.** Gerät nach Anspruch 1 in Auslegung zur Abgabe des sorbierbaren Mediums, wobei das Gefäß mit einem sorbierbaren Medium beladen worden ist, für welches das physikalische Festphasen-Sorptionsmedium adsorptive Affinität aufweist.

**5.** Gerät nach Anspruch 4, wobei das sorbierbare Medium Arsin ist.

**6.** Gerät nach Anspruch 1, wobei das Kohlenstoff-Sorptionsmaterial einen Prozentwert für desorbierbares Sorbat des Kohlenstoff-Sorptionsmaterials für Arsingas von mindestens 15% aufweist.

**7.** Gerät nach Anspruch 1, wobei das Kohlenstoff-Sorptionsmaterial die folgende Adsorptionsbeladecharakteristik aufweist:

| Druck, Pascal (Torr) | Beladung (Gramm Arsin/Liter Sorptionsmittel) von mindestens: |
|---|---|
| 3333,06 (25) | 35 |
| 6666,12 (50) | 75 |
| 13332,24 (100) | 100 |
| 26664,48 (200) | 160 |
| 39996,72 (300) | 200 |
| 53328,96 (400) | 225 |
| 66661,2 (500) | 240 |
| 73327,32 (550) | 250 |
| 86659,56 (650) | $\approx 300$ |

**8.** Gerät nach Anspruch 1, wobei mehr als 80% des Porenvolumens des Kohlenstoff-Sorptionsmaterials aus Poren mit einem Durchmesser im Bereich von 0,2 Nanometer (2 Angström) bis 10 Nanometer (100 Angström) bestehen.

**9.** Gerät nach Anspruch 1, wobei mindestens 50% des Porenvolumens des Sorptionsmaterials in einem Bereich von 0,2 Nanometer bis 2 Nanometer (2 bis 20 Angström) liegen.

**10.** Gerät nach Anspruch 1, wobei mindestens 80% des Porenvolumens des Sorptionsmaterials innerhalb eines Bereichs von 0,2 Nanometer bis 2 Nanometer (2 bis 20 Angström) liegen.

**11.** Gerät nach Anspruch 1, wobei im wesentlichen das gesamte Porenvolumen des Sorptionsmaterials innerhalb eines Bereichs von 0,2 Nanometer bis 2 Nanometer (2 bis 20 Angström) liegt.

**12.** Gerät nach Anspruch 1, wobei das Sorptionsmaterial einen mittleren Porendurchmesser innerhalb eines Bereichs von 0,2 Nanometer bis 2 Nanometer (2 bis 20 Angström) hat.

**13.** Gerät nach Anspruch 1, wobei das Sorptionsmaterial eine Sorptionsmittelarbeitskapazität Cw, gemessen fiir Arsingas bei 5332,90 Pascal (40 Torr) und bei 86659,56 Pascal (650 Torr), von mindestens 100 hat.

**14.** Gerät nach Anspruch 1, wobei das Sorptionsmaterial eine Sorptionsmittelarbeitskapazität Cw, gemessen für Arsingas bei 5332,90 Pascal (40 Torr) und bei 86659,56 Pascal (650 Torr), von mindestens 180 hat.

**15.** Gerät nach Anspruch 1, wobei das Sorptionsmaterial eine Sorptionsmittelarbeitskapazität Cw, gemessen für Arsingas bei 5332,90 Pascal (40 Torr) und bei 86659,56 Pascal (650 Torr), von mindestens 200 hat.

**16.** Gerät nach Anspruch 1, wobei das Sorptionsmaterial eine aus der Gruppe Kügelchen, Granulat, Pellets, Tabletten, Pulver, Teilchenmaterial, Extrudatmaterial, Gewebe, netzförmige Materialien, Wabenmatrixmonolith, Komposite des Kohlenstoff-Sorptionsmittels mit anderen Komponenten, und gemahlenen und gebrochenen Formen solcher Konformationen von Sorptionsmaterialien ausgewählte Konformation hat.

**17.** Gerät nach Anspruch 1, wobei das Sorptionsmaterial Kügelchen aus Aktiv-Kohlenmaterial umfasst.

**18.** Gerät nach Anspruch 17, wobei das Kohlenstoff-Sorptionsmaterial Kügelchen von Aktivkohlenmaterial mit einer Teilchengröße im Bereich von 0,1 Millimeter bis 1 Zentimeter Durchmesser umfasst.

**19.** Gerät nach Anspruch 18, wobei das Kohlenstoff-Sorptionsmaterial Kügelchen aus Aktivkohlenmaterial mit einer Teilchengröße im Bereich von 0,25 bis 2 Millimeter Durchmesser umfasst.

**20.** Gerät nach Anspruch 1, wobei das Sorptionsmaterial arm an Spurenkomponenten aus der Gruppe Wasser, Metalle und oxidische Übergangsmetallspezien in ausreichender Konzentration zum Zersetzen des sorbierbaren Mediums in dem Speicher- und Abgabegefäß ist.

**21.** Gerät nach Anspruch 20, wobei die Konzentration von Spurenkomponenten aus der Gruppe Wasser und oxidische Übergangsmetallspezien auf dem Sorptionsmaterial unzureichend ist, um mehr als 5 Gewichtsprozent des sorbierbaren Mediums nach einem Jahr bei 25°C und dem genannten Innendruck zu zersetzen.

**22.** Gerät nach Anspruch 20, wobei die Konzentration von Spurenkomponenten aus der Gruppe Wasser und oxidische Übergangsmetallspezien auf dem Sorptionsmaterial unzureichend ist, um mehr als 1 Gewichtsprozent des sorbierbaren Mediums nach einem Jahr bei 25°C und dem genannten Innendruck zu zersetzen.

**23.** Gerät nach Anspruch 20, wobei die Konzentration von Spurenkomponenten aus der Gruppe Wasser, Metalle und oxidische Übergangsmetallspezien, basierend auf dem Gewicht des Kohlenstoffsorptionsmaterials, auf dem Sorptionsmaterial unzureichend ist, um eine Zersetzung des sorbierbaren Mediums zu verursachen, die zu einem Anstieg von mehr als 25% des Innendrucks nach einer Woche bei 25°C in dem Speicher- und Abgabegefäß führen würde.

**24.** Gerät nach Anspruch 20, wobei die Konzentration von Spurenkomponenten aus der Gruppe Wasser, Metalle und oxidische Übergangsmetallspezien, basierend auf dem Gewicht des Kohlenstoff-Sorptionsmaterials, auf dem Sorptionsmaterial unzureichend ist, um eine Zersetzung des sorbierbaren Mediums zu verursachen, die zu einem Anstieg des Innendrucks um mehr als 10% nach einer Woche bei 25°C in dem Speicher- und Abgabegefäß führen würde.

**25.** Gerät nach Anspruch 20, wobei das Sorptionsmaterial weniger als 350 Gewichtsteile pro Million von Spurenkomponenten aus der Gruppe Wasser und oxidische Übergangsmetallspezien, basierend auf dem Gewicht des Kohlenstoff-Sorptionsmaterials, enthält.

**26.** Gerät nach Anspruch 20, wobei das Sorptionsmaterial weniger als 100 Gewichtsteile pro Million Spurenkomponenten aus der Gruppe Wasser und oxidische Übergangsmetallspezien, basierend auf dem Gewicht des Kohlenstoff-Sorptionsmaterials, enthält.

**27.** Gerät nach Anspruch 20, wobei das Sorptionsmaterial weniger als 10 Gewichtsteile pro Million Spurenkomponenten aus der Gruppe Wasser und oxidische Übergangsmetallspezien, basierend auf dem Gewicht des Kohlenstoff-Sorptionsmaterials, enthält.

**28.** Gerät nach Anspruch 20, wobei das Sorptionsmaterial weniger als 1 Gewichtsteil pro Million Spurenkomponenten aus der Gruppe Wasser und oxidische Übergangsmetallspezien, basierend auf dem Gewicht des Kohlenstoff-Sorptionsmaterials, enthält.

**29.** Gerät nach Anspruch 1, wobei das sorbierbare Medium aus der Gruppe Silan, Diboran, Arsin, Phosphor, Phosgen, Chlor, $BCl_3$, $BF_3$, $B_2D_6$, Wolframhexafluorid, $(CH_3)_3$ Sb, Fluorwasserstoff, Chlorwasserstoff, $GeF_4$, $SiF_4$, Jodwasserstoff, Bromwasserstoff, Cyanwasserstoff, German, Ammoniak, Stibin, Schwefelwasserstoff, Selenwasserstoff, Wasserstofftellurid, und $NF_3$ ausgewählt ist.

**30.** Gerät nach Anspruch 1, wobei das Sorptionsmaterial ein verschiedenes Adsorptionsmaterial auf seiner Oberfläche zur Verbesserung der Adsorption aufweist.

**31.** Gerät nach Anspruch 30, wobei das verschiedene Material (1) die Sorption eines spezifischen Mediums auf dem Sorptionsmittel steigert, wenn das Sorptionsmittel ursprünglich mit dem nachfolgend abzugebenden Medium beladen wird, und/oder (2) die Desorption des Mediums steigert, wenn das Sorptionsmittel den Prozessbedingungen zur Abgabe des Mediums aus dem Speicher- und Abgabegefäß unterzogen wird.

EP 0 854 749 B1

32. Gerät nach Anspruch 1, wobei das Sorptionsmaterial einen Überzug aus Karbowachs auf seinen Oberflächen aufweist, um den sorptiven Charakter des Materials zu verbessern.

33. Gerät nach Anspruch 1, das weiter ein Chemisorptionsmaterial in dem Speicher- und Abgabegefäß mit einer Affinität fiir Verunreinigungen aufweist, die der sorptiven Wirksamkeit des Sorptionsmaterials ungünstig sind.

34. Gerät nach Anspruch 33, wobei das Chemisorptionsmaterial aus der folgenden Gruppe ausgewählt ist.:

A) Reinigungsmittel einschließlich eines Trägers mit einer diesem zugeordneten, aber nicht kovalent daran gebundenen Verbindung, die in Anwesenheit solcher Kontaminationsstoffe ein Anion bereitstellen, das reaktiv die Abscheidung eines solchen Kontaminationsmittels bewirkt, wobei die Verbindung aus einer oder mehreren Mitgliedern der folgenden Gruppe ausgewählt ist:

i) Carbanionquellenverbindungen, deren entsprechende protonierte Carbanionverbindungen einen $pK_a$-Wert von etwa 22 bis etwa 36 haben, und

ii) Anionenquellenverbindungen, die durch Reaktion der genannten Carbanionquellenverbindungen mit dem Sorbatgas gebildet werden, und

B) Reinigungsmittel, die umfassen:

i) einen interten Träger mit einem Oberflächenbereich im Bereich von 50 bis 1000 Quadratmeter pro Gramm, und der thermisch bis mindestens 250°C stabil ist, und

ii) eine aktive Reinigungsmittelspezies, die auf dem Träger mit einer Konzentration von etwa 0,01 bis etwa 1,0 Mol pro Liter Träger vorhanden ist und durch Ablagerung eines Metalls der Gruppe IA, das aus Natrium, Kalium, Rubidium und Caesium und ihren Gemischen und Legierungen ausgewählt und durch Pyrolyse hiervon auf den Träger aufgebracht ist.

35. Gerät nach Anspruch 33, wobei das Chemisorptionsmittel aus der Gruppe Trityllithium und Kaliumarsenid ausgewählt ist.

36. Gerät nach Anspruch 33, wobei das Chemisorptionsmittel als ein separates Bett aus Chemisorptionsmaterial in Strömungsverbindung mit dem Sorptionsmaterial in dem Speicher- und Abgabegefäß vorhanden ist.

37. Gerät nach Anspruch 33, wobei das Chemisorpionsmittel in dem Sorptionsmaterial in dem Speicher- und Abgabegefäß dispergiert ist.

38. Gerät nach Anspruch 1, wobei der Innendruck des sorbierbaren Mediums weniger als 159.986,88 Pascal (1200 Torr) beträgt.

39. Gerät nach Anspruch 38, wobei das sorbierbare Medium aus der Gruppe Gas, Dampf, Flüssigkeit, Mehrphasenmedium und Mediengemischen ausgewählt ist.

40. Gerät nach Anspruch 38, wobei das sorbierbare Medium aus der Gruppe Hydride, deuterierte Hydride, Halide, gasförmige Halidverbindungen, Organoverbindungen und organometallische Verbindungen ausgewählt ist.

41. Gerät nach Anspruch 1, wobei das Sorptionsmaterial aus Aktivkohlekügelchen mit einem Durchmesser im Bereich von 0,1 bis etwa 1 Zentimeter besteht.

42. Gerät nach Anspruch 1, das weiter eine Kryopumpe (416) aufweist, das mit der Abgabebaugruppe (404, 406, 408, 410) zur Druckbeaufschlagung des desorbierten Gases und zum Austragen des resultierenden Druckgases verbunden ist.

43. Gerät nach Anspruch 1, wobei die Abgabebaugruppe (12, 14, 16) in Gasströmungsverbindung mit einem Ionenimplantationssystem (52) angeordnet ist.

44. Gerät nach Anspruch 1, wobei die Abgabebaugruppe (12, 14, 16) in Strömungsverbindung mit einer Halbleiter-

27

fertigungseinrichtung steht.

**45.** Verfahren zum Bereitstellen eines strömungsmittelförmigen Reagens, das umfasst:

Bereitstellen eines Adsorptions/Desorptions-Geräts nach Anspruch 1, wobei die Abgabebaugruppe ein wahlweise betätigbares Abgabeventil (14) umfasst,

Beladen des Speicher- und Abgabegefäßes (10) mit einem sorbierbaren Medium, fiir welches das genannte physikalische Festphasen-Sorptionsmittel sorptive Affinität aufweist,

Speichern des sorbierbaren Mediums in dem Speicher- und Abgabegefäß bei geschlossenem Abgabeventil, und

wahlweises Abgeben des sorbierbaren Mediums durch Öffnen des Abgabeventils zum Abgeben einer gewählten Menge des sorbierbaren Mediums aus dem Speicher- und Abgabegefäß.

**46.** Verfahren nach Anspruch 45, wobei das strömungsmittelförmige Reagens ein Medium ist, das aus der Gruppe Silan, Diboran, Arsin, Phosphin, Chlor, $BCl_3$, $BF_3$, $B_2D_6$, Wolframhexafluorid, $(CH_3)_3Sb$, Fluorwasserstoff, Chlorwasserstoff, deuterierte Hydride, $GeF_4$, $SiF_4$, Jodwasserstoff, Bromwasserstoff, German, Ammoniak, Stibin, Schwefelwasserstoff, Selenwasserstoff, Tellurwasserstoff, $NF_3$, und Gemischen hiervon ausgewählt ist.

**47.** Verfahren nach Anspruch 45, wobei das Reagenzmedium eine organometallische Verbindung ist, die eine Metallhälfte aufweist, die aus der Gruppe Aluminium, Barium, Strontium, Gallium, Indium, Wolfram, Antimon, Silber, Gold, Palladium, Gadolinium, Kalzium, Lithium, Kalium, Caesium, Titan, Yttrium, Zirkonium, Blei, Tantal, Niob, Vanadium, Platin, Thallium, Wismuth, Zinn, Tellur, Selen, Nickel, Zink, Wolfram, Mangan, Eisen, Kobalt, Molybdän, Magnesium, Scandium, Chrom, Kupfer, Kadmium, Lanthan und Zer ausgewählt ist.

**48.** Verfahren nach Anspruch 45, das weiter das Kryopumpen des desorbierten Mediums aus dem Speicher- und Abgabegefäß auf einen vorgegebenen Druck umfasst, wobei dieser vorgegebene Druck höher als der Druck des desorbierten Mediums ist, das aus dem Speicher- und Abgabegefäß ausströmt.

**49.** Verfahren nach Anspruch 45, das weiter das Ausströmen des desorbierten sorbierbaren Mediums aus dem Speicher- und Abgabegefäß in eine Ionenimplantationszone umfasst.

**50.** Verfahren nach Anspruch 45, das weiter das Ausströmen des desorbierten sorbierbaren Mediums aus dem Speicher- und Abgabegefäß in eine Halbleiterfertigungseinrichtung umfasst.

**Revendications**

**1.** Appareil d'adsorption-désorption, destiné au stockage et à la distribution d'un fluide sorbable, incluant un récipient de stockage et de distribution (10) construit et approprié pour maintenir un milieu sorbant en phase physique solide, et pour un fluide s'écoulant sélectivement à l'intérieur et à l'extérieur dudit récipient ; un milieu sorbant de charbon en phase physique solide (350) disposé dans ledit récipient de stockage et de distribution à une pression intérieure de fluide sorbable ; et un ensemble de distribution (12, 14, 16), l'appareil d'adsorption-désorption étant approprié pour une distribution sélective dudit fluide sorbable à l'aide d'au moins une parmi (a) la désorption différentielle par pression du fluide sorbable à partir dudit milieu sorbant en phase physique solide et (b) la désorption thermique du fluide sorbable à partir dudit milieu sorbant en phase physique solide, **caractérisé en ce que** ledit milieu sorbant en phase physique solide possède

{i} une capacité de sorption (Sorbent Working Capacity), Cw, mesurée en ce qui concerne l'arsine gazeuse à 5 332,90 Pascals (40 Torr) et à 86 659,56 Pascals (650 Torr), d'au moins 50,
{ii} un volume de pores dans la gamme allant d'environ 0,1 à environ 5,0 centimètres cubes de volume de pores par gramme de matière sorbante,
{iii} plus de 50 % de son volume de pores constitué de pores possédant un diamètre dans une gamme allant d'environ 0,2 nanomètre (2 Angströms) à environ 10 nanomètres (100 Angströms), et
{iv} un diamètre de pores moyen dans une gamme allant d'environ 0,2 nanomètre (2 Angströms) à environ 2,0 nanomètres (20 Angströms).

**2.** Appareil selon la revendication 1, dans lequel la matière sorbante de charbon possède un isotherme d'adsorption en ce qui concerne l'arsine gazeuse, à 25°C, comme une fonction de pression, satisfaisant la caractéristique de charge par adsorption suivante :

| Pression, Pascals (Torr) | Charge (grammes d'arsine /litre de sorbant) |
|---|---|
| 3 333,06 (25) | 35 à 60 |
| 6 666,12 (50) | 75 à 100 |
| 13 332,24 (100) | 100 à 115 |
| 26 664,48 (200) | 160 à 175 |
| 39 996,72 (300) | 200 à 220 |
| 53 328,96 (400) | 225 à 245 |
| 66 661,2 (500) | 240 à 260 |
| 73 327,32 (550) | 250 à 275 |
| 86 659,56 (650) | 260 à 300 |

**3.** Appareil selon la revendication 1, dans lequel la matière sorbante de charbon possède une volume de pores dans la gamme allant d'environ 0,2 à environ 2,0 centimètres cubes de volume de pores par gramme de matière sorbante.

**4.** Appareil selon la revendication 1, tel qu'adapté pour distribuer du fluide sorbable, dans lequel on a chargé le récipient avec un fluide sorbable pour lequel ledit milieu sorbant en phase physique solide a une affinité d'adsorption.

**5.** Appareil selon la revendication 4, dans lequel ledit fluide sorbable est l'arsine.

**6.** Appareil selon la revendication 1, dans lequel la matière sorbante de charbon possède un pourcentage de sorbat désorbable de la matière sorbante de charbon en ce qui concerne l'arsine gazeuse d'au moins 15 %.

**7.** Appareil selon la revendication 1, dans lequel la matière sorbante de charbon possède la caractéristique de charge par adsorption suivante :

| Pression, Pascals (Torr) | Charge (grammes d'arsine/litre de sorbant) d'au moins : |
|---|---|
| 3 333,06 (25) | 35 |
| 6 666,12 (50) | 75 |
| 13 332,24 (100) | 100 |
| 26 664,48 (200) | 160 |
| 39 996,72 (300) | 200 |
| 53 328,96 (400) | 225 |
| 66661,2 (500) | 240 |
| 73 327,32 (550) | 250 |
| 86 659,56 (650) | ∼300. |

**8.** Appareil selon la revendication 1, dans lequel la matière sorbante de charbon possède plus de 80 % de son volume de pores constitué de pores possédant un diamètre dans la gamme allant de 0,2 nanomètre (2 Angströms) à 10 nanomètres (100 Angströms).

**9.** Appareil selon la revendication 1, dans lequel la matière sorbante possède au moins 50 % du volume de pores dans une gamme allant de 0,2 nanomètre à 2 nanomètres (2 à 20 Angströms).

**10.** Appareil selon la revendication 1, dans lequel la matière sorbante possède au moins 80 % du volume de pores dans une gamme allant de 0,2 nanomètre à 2 nanomètres (2 à 20 Angströms).

**11.** Appareil selon la revendication 1, dans lequel la matière sorbante possède essentiellement tout le volume de pores dans une gamme allant de 0,2 nanomètre à 2 nanomètres (2 à 20 Angströms).

**12.** Appareil selon la revendication 1, dans lequel la matière sorbante possède un diamètre de pores moyen dans une gamme allant de 0,2 nanomètre à 2 nanomètres (2 à 20 Angströms).

**13.** Appareil selon la revendication 1, dans lequel la matière sorbante possède une capacité de sorption, Cw, mesurée en ce qui concerne l'arsine gazeuse à 5 332,90 Pascals (40 Torr) et à 86 659,56 Pascals (650 Torr), d'au moins 100.

**14.** Appareil selon la revendication 1, dans lequel la matière sorbante possède une capacité de sorption, Cw, mesurée en ce qui concerne l'arsine gazeuse à 5 332,90 pascals (40 torr) et à 86 659,56 Pascals (650 Torr), d'au moins 180.

**15.** Appareil selon la revendication 1, dans lequel la matière sorbante possède une capacité de sorption, Cw, mesurée en ce qui concerne l'arsine gazeuse à 5 332,90 Pascals (40 Torr) et à 86 659,56 Pascals (650 Torr), d'au moins 200.

**16.** Appareil selon la revendication 1, dans lequel la matière sorbante possède une conformation choisie dans le groupe formé par les perles, les granulés, les pastilles, les comprimés, les poudres, les particules, les extrudats, l'étoffe, des matières en forme de toile, un monolithe de matrice en nid d'abeilles, des composites du sorbant de charbon avec d'autres composants, et des formes fragmentées et concassées desdites conformations de matières sorbantes.

**17.** Appareil selon la revendication 1, dans lequel la matière sorbante comprend une matière de charbon actif en perle.

**18.** Appareil selon la revendication 17, dans lequel la matière sorbante de charbon comprend une matière de charbon actif en perle avec une taille de particules dans la gamme allant de 0,1 millimètre à 1 centimètre de diamètre.

**19.** Appareil selon la revendication 18, dans lequel la matière sorbante de charbon comprend une matière de charbon actif en perle avec une taille de particules dans la gamme allant de 0,25 à 2 millimètres de diamètre.

**20.** Appareil selon la revendication 1, dans lequel la matière sorbante est dépourvue de composants à l'état de trace choisis dans le groupe formé par l'eau, les métaux et les espèces de métaux de transition oxydés dans une concentration suffisante pour décomposer le fluide sorbable dans ledit récipient de stockage et de distribution.

**21.** Appareil selon la revendication 20, dans lequel, sur la matière sorbante, la concentration en composants à l'état de trace choisis dans le groupe formé par l'eau et les espèces de métaux de transition oxydés, est insuffisante pour décomposer plus de 5 % en poids du fluide sorbable après 1 an à 25°C et à ladite pression intérieure.

**22.** Appareil selon la revendication 20, dans lequel, sur la matière sorbante, la concentration en composants à l'état de trace choisis dans le groupe formé par l'eau et les espèces de métaux de transition oxydés, est insuffisante pour décomposer plus de 1 % en poids du fluide sorbable après 1 an à 25°C et à ladite pression intérieure.

**23.** Appareil selon la revendication'20, dans lequel, sur la matière sorbante, la concentration en composants à l'état de trace choisis dans le groupe formé par l'eau, les métaux, et les espèces de métaux de transition oxydés, basée sur le poids de la matière sorbante de charbon, est insuffisante pour engendrer la décomposition du fluide sorbable aboutissant à une élévation supérieure à 25 % de la pression intérieure après 1 semaine à 25°C dans le récipient de stockage et de distribution.

**24.** Appareil selon la revendication 20, dans lequel, sur la matière sorbante, la concentration en composants à l'état de trace choisis dans le groupe formé par l'eau, les métaux, et les espèces de métaux de transition oxydés, basée sur le poids de la matière sorbante de charbon, est insuffisante pour engendrer la décomposition du fluide sorbable aboutissant à une élévation supérieure à 10 % de la pression intérieure après 1 semaine à 25°C dans le récipient de stockage et de distribution.

**25.** Appareil selon la revendication 20, dans lequel la matière sorbante contient moins de 350 parties par million (ppm) en poids de composants à l'état de trace choisis dans le groupe formé par l'eau et les espèces de métaux de transition oxydés, basées sur le poids de la matière sorbante de charbon.

**26.** Appareil selon la revendication 20, dans lequel la matière sorbante contient moins de 100 parties par million en poids de composants à l'état de trace choisis dans le groupe formé par l'eau et les espèces de métaux de transition oxydés, basées sur le poids de la matière sorbante de charbon.

**27.** Appareil selon la revendication 20, dans lequel la matière sorbante contient moins de 10 parties par million en poids de composants à l'état de trace choisis dans le groupe formé par l'eau et les espèces de métaux de transition oxydés, basées sur le poids de la matière sorbante de charbon.

**28.** Appareil selon la revendication 20, dans lequel la matière sorbante contient moins de 1 partie par million en poids de composants à l'état de trace choisis dans le groupe formé par l'eau et les espèces de métaux de transition oxydés, basée sur le poids de la matière sorbante de charbon.

**29.** Appareil selon la revendication 1, dans lequel le fluide sorbable est choisi dans le groupe formé par le silane, le diborane, l'arsine, la phosphine, le phosgène, le chlore, $BCl_3$, $BF_3$, $B_2D_6$, l'hexafluorure de tungstène, $(CH_3)_3Sb$, le fluorure d'hydrogène, le chlorure d'hydrogène, $GeF_4$, $SiF_4$, l'iodure d'hydrogène, le bromure d'hydrogène, le cyanure d'hydrogène, le germane, l'ammoniac, la stibine, le sulfure d'hydrogène, le séléniure d'hydrogène, le tellurure d'hydrogène, et $NF_3$.

**30.** Appareil selon la revendication 1, dans lequel la matière sorbante possède, sur sa surface, une matière adsorbante différente pour améliorer l'adsorption.

**31.** Appareil selon la revendication 30, dans lequel la matière différente accroît (1) la sorption d'un fluide spécifique sur le milieu sorbant quand le sorbant est chargé à l'origine avec le fluide à distribuer ultérieurement, et/ou (2) la désorption du fluide quand le sorbant est soumis à des conditions de traitement pour distribuer le fluide à partir du récipient de stockage et de distribution.

**32.** Appareil selon la revendication 1, dans lequel la matière sorbante possède, sur ses surfaces, un revêtement de Carbowax® pour accroître le caractère sorbant de la matière.

**33.** Appareil selon la revendication 1, comprenant de plus une matière chimisorbante dans le récipient de stockage et de distribution ayant une affinité pour les contaminants qui sont nuisibles à l'efficacité de sorption de la matière sorbante.

**34.** Appareil selon la revendication 33, dans lequel ledit chimisorbant est choisi dans le groupe formé par :

(A) des agents piégeurs incluant un support ayant associé à celui-ci, mais n'étant pas lié de façon covalente à celui-ci, un composé qui, en en présence d'un tel contaminant, fournit un anion qui est réactif pour effectuer l'élimination d'un tel contaminant, ledit composé étant choisi parmi un ou plusieurs éléments du groupe formé par :

(i) des composés source de carbanions dont les composés carbanion protonés correspondants possèdent une valeur de $pK_a$ allant d'environ 22 à environ 36 ; et

(ii) des composés source d'anions formés par réaction desdits composés source de carbanions avec le sorbat gazeux ; et

(B) des agents piégeurs comprenant :

(i) un support inerte possédant une surface spécifique dans la gamme allant de 50 à 1000 mètres carrés par gramme, et thermiquement stable jusqu'à au moins 250°C ; et

(ii) une espèce active pour piéger, présente sur le support à une concentration allant de 0,01 à environ 1,0 mole par litre de support, et formée à l'aide du dépôt sur le support d'un métal du Groupe IA choisi parmi le sodium, le potassium, le rubidium et le césium et leurs mélanges et alliages, et de leur pyrolyse sur ledit support.

**35.** Appareil selon la revendication 33, dans lequel ledit chimisorbant est choisi dans le groupe formé par l'arséniure de trityllithium et de potassium.

**36.** Appareil selon la revendication 33, dans lequel ledit chimisorbant est présent sous forme de lit séparé de matière chimisorbante en communication d'écoulement fluidique avec la matière sorbante dans ledit récipient de stockage et de distribution.

**37.** Appareil selon la revendication 33, dans lequel ledit chimisorbant est dispersé dans la matière sorbante dans ledit récipient de stockage et de distribution.

**38.** Appareil selon la revendication 1, dans lequel ladite pression intérieure de fluide sorbable est inférieure à 159 986,88 Pascals (1 200 Torr).

**39.** Appareil selon la revendication 38, dans lequel ledit fluide sorbable est choisi dans le groupe formé par le gaz, la vapeur, le liquide, le fluide multiphasique, et les mélanges de fluides.

**40.** Appareil selon la revendication 38, dans lequel ledit fluide sorbable est choisi dans le groupe formé par les hydrures, les hydrures deutériés, les halogénures, les composés gazeux d'halogénure, les composés organiques, et les composés organo-métalliques.

**41.** Appareil selon la revendication 1, dans lequel ladite matière sorbante est composée de charbon actif en perle possédant un diamètre dans la gamme allant de 0,1 à environ 1 centimètre.

**42.** Appareil selon la revendication 1, comprenant de plus une pompe cryogénique (416) connectée à l'ensemble de distribution (404, 406, 408, 410) pour pressuriser le gaz désorbé et décharger le gaz pressurisé en conséquence.

**43.** Appareil selon la revendication 1, dans lequel l'ensemble de distribution (12, 14, 16) est connecté en communication d'écoulement gazeux avec un système d'implantation ionique (52).

**44.** Appareil selon la revendication 1, dans lequel l'ensemble de distribution (12, 14, 16) est connecté en communication d'écoulement avec une installation de fabrication de semi-conducteur.

**45.** Procédé pour fournir un réactif fluide, comprenant les étapes consistant :

à fournir un appareil d'adsorption/désorption selon la revendication 1, dans lequel l'ensemble de distribution comprend une vanne de distribution (14) actionnable sélectivement ;

à charger le récipient de stockage et de distribution (10) avec un fluide sorbable pour lequel ledit milieu sorbant en phase physique solide a une affinité de sorption ;

à stocker le fluide sorbable dans le récipient de stockage et de distribution avec la vanne de distribution dans un état fermé ; et

à distribuer sélectivement ledit fluide sorbable en ouvrant ladite vanne de distribution pour décharger une quantité choisie de fluide sorbable à partir du récipient de stockage et de distribution.

**46.** Procédé selon la revendication 45, dans lequel le réactif fluide comprend un fluide choisi dans le groupe formé par le silane, le diborane, l'arsine, la phosphine, le chlore, $BCl_3$, $BF_3$, $B_2D_6$, l'hexafluorure de tungstène, $(CH_3)_3Sb$, le fluorure d'hydrogène, le chlorure d'hydrogène, les hydrures deutériés, $GeF_4$, $SiF_4$, l'iodure d'hydrogène, le bromure d'hydrogène, le germane, l'ammoniac, la stibine, le sulfure d'hydrogène, le séléniure d'hydrogène, le tellurure d'hydrogène, $NF_3$, et leurs mélanges.

**47.** Procédé selon la revendication 45, dans lequel le fluide réactif est un composé organométallique qui comprend une fraction métallique choisie dans le groupe formé par l'aluminium, le baryum, le strontium, le gallium, l'indium, le tungstène, l'antimoine, l'argent, l'or, le palladium, le gadolinium, le calcium, le lithium, le potassium, le césium, le titane, l'yttrium, le zirconium, le plomb, le tantale, le niobium, le vanadium, le platine, le thallium, le bismuth, l'étain, le tellurium, le sélénium, le nickel, le zinc, le tungstène, le manganèse, le fer, le cobalt, le molybdène, le magnésium, le scandium, le chrome, le cuivre, le cadmium, le lanthane, et le cérium.

**48.** Procédé selon la revendication 45, comprenant de plus le cryopompage du fluide désorbé à partir du récipient de stockage et de distribution à une pression prédéterminée, dans lequel une telle pression prédéterminée est supérieure à la pression du fluide désorbé écoulé à l'extérieur du récipient de stockage et de distribution.

**49.** Procédé selon la revendication 45, comprenant de plus l'écoulement du fluide sorbable désorbé, à partir du récipient de stockage et de distribution vers une zone d'implantation ionique.

**50.** Procédé selon la revendication 45, comprenant de plus l'écoulement du fluide sorbable désorbé, à partir du récipient de stockage et de distribution vers une installation de fabrication de semi-conducteur.

FIG.1

## PORE SIZE DISTRIBUTION

**FIG.2**

**FIG.4**

FIG.3

FIG.5

FIG. 6

FIG.7

FIG.8

EP 0 854 749 B1

FIG.9

FIG.10

# FIG.11.

EP 0 854 749 B1

FIG.12